# FASCICULE DE BREVET EUROPEEN

(11) **EP 3 681 645 B1**
(45) Date de publication et mention de la délivrance du brevet: **29.05.2024**
(21) Numéro de dépôt: 18773803.4
(22) Date de dépôt: 03.09.2018
(51) Int. Cl.: B05B 17/06, B05B 7/00, F24F 6/14, B05B 7/08, B60H 3/02, B64D 13/06

(54) **DISPOSITIF DE GÉNÉRATION DE GOUTTELETTES À PARTIR D'UN LIQUIDE COMPRENANT DES MOYENS DE VENTILATION AMÉLIORÉS, ET SON PROCÉDÉ DE MISE EN OEUVRE**
VORRICHTUNG ZUR ERZEUGUNG VON TRÖPFCHEN AUS EINER FLÜSSIGKEIT MIT VERBESSERTEN VENTILATIONSMITTELN UND VERFAHREN ZUR IMPLEMENTIERUNG DERSELBEN
DEVICE FOR GENERATING DROPLETS FROM A LIQUID COMPRISING IMPROVED VENTILATION MEANS, AND METHOD FOR IMPLEMENTING SAME

(30) Priorité: 11.09.2017 FR 1758343
(43) Date de publication de la demande: 22.07.2020
(73) Titulaire: ARECO FINANCES ET TECHNOLOGIE - ARFITEC, 06130 Grasse (FR)
(72) Inventeur: DECORDE, Nicolas, 06370 Mouans Sartoux (FR); GSCHWIND, Michel, 06130 Placassier (FR); RICHARD, Frédéric, 06220 Vallauris (FR); ROUSSEAU, Yves, 78322 Le Mesnil St Denis (FR); FEUILLARD, Vincent, 78322 Le Mesnil St Denis (FR); PETIT, Stéphane, 78322 Le Mesnil St Denis (FR)
(74) Mandataire: Schmidt, Martin Peter
(86) Numéro de dépôt international: PCT/FR2018/052145
(87) Numéro de publication internationale: WO 2019/048763

(56) Documents cités:
- EP-A1- 0 691 162
- WO-A1-2009/013954
- WO-A1-2016/087752
- JP-A- S5 768 164
- US-A1- 2014 090 562

## Description

### Domaine technique de l'invention

L'invention concerne les dispositifs, plus particulièrement de petite taille, aptes à générer un brouillard de micro-gouttelettes d'un liquide, par exemple d'eau, dans le but de rafraîchir l'atmosphère. L'invention trouve son application principale à de tels dispositifs, qui peuvent être montés dans un véhicule pour humidifier et rafraîchir l'air et le rendre agréable à respirer. Néanmoins, ces dispositifs peuvent également être installés dans d'autres environnements, comme sur un étal pour humidifier et rafraîchir des produits frais exposés à la vente. Ils peuvent également être utilisés, afin d'assurer une régulation d'humidité dans les endroits confinés.

### Etat de la technique

Le brevet EP 0 691 162 décrit un dispositif de nébulisation équipé d'une buse de concentration, dans laquelle un élément piézoélectrique immergé dans l'eau génère un brouillard de gouttelettes d'eau à la sortie de la buse précitée. Le brouillard, qui est ensuite emporté par un courant d'air généré par un ventilateur, est extrait dans l'atmosphère via un orifice de diffusion. Cette buse est disposée verticalement, avec la sortie focalisante pointant vers le haut. Cette caractéristique est désavantageuse, dans la mesure où elle est coûteuse en énergie, car la nébulisation est réalisée à l'encontre du poids du liquide présent dans la buse.

On connait en outre, par exemple de EP 0 782 885, un dispositif dont la buse possède une sortie focalisante globalement dirigée vers le bas. Ce dispositif de nébulisation possède un ventilateur, situé sensiblement à la même altitude que l'élément piézoélectrique. En service, le brouillard sortant de la buse est dévié par un déflecteur, puis est emporté par le flux d'air créé par le ventilateur. L'orifice de diffusion est situé à peu près au droit de la sortie de la buse, au-dessous de cette dernière.

Ce dispositif de nébulisation connu présente cependant certains inconvénients. En effet la buse possède nécessairement une position verticale, avec sa sortie dirigée vers le bas, ce qui n'est pas toujours commode. Ce dispositif est en outre d'une structure relativement complexe, notamment en ce qu'il présente un nombre élevé d'éléments constitutifs. Par ailleurs, il peut être à l'origine de problèmes d'hygiène, dus en particulier à un phénomène de stagnation du liquide. Ce dispositif de nébulisation implique en outre un volume mort de liquide relativement élevé. De plus il a été constaté que d'éventuelles fuites de liquide, en service, sont difficiles à identifier. Enfin la nébulisation produite par ce dispositif n'est pas d'une bonne qualité dans toutes les situations fonctionnelles, en particulier lorsque le dispositif est utilisé dans un environnement subissant de fortes accélérations, comme par exemple un véhicule automobile.

La Demanderesse a proposé, par FR 3 023 735, un nébuliseur compact dans lequel l'axe de la buse est incliné par rapport à l'horizontale, selon un axe typiquement inférieur à 30°. Il est prévu un bac de collecte, ainsi qu'un tube d'écoulement s'étendant selon l'axe de la buse, qui est par conséquent lui aussi incliné. En service, un mélange de liquide et de gouttelettes, destinées à former du brouillard, s'écoulent dans le tube précité. Le liquide est retourné vers le bac de collecte, sans atteindre la sortie du tube, alors que le brouillard est extrait hors du tube en direction de l'environnement à rafraichir. Ce document prévoit de faire appel à un ventilateur qui dirige un flux d'air, soit perpendiculairement au jet de liquide, soit de manière parallèle à celui-ci.

Bien que le dispositif connu de FR 3 023 735 soit globalement satisfaisant, il présente cependant certains inconvénients. En effet, il possède un rendement relativement peu élevé, à savoir que seule une faible fraction de liquide est effectivement nébulisée dans l'environnement. Par ailleurs, on a constaté que le liquide nébulisé comporte une proportion importante de grosses gouttes, ce qui confère un caractère « humide » au brouillard ainsi diffusé.

US 2014 090562 décrit un dispositif d'humidification, comprenant une unité de pulvérisation. Cette dernière est formée par une chambre de pulvérisation, associée à un piston, à un moteur ainsi qu'à un élément conducteur. En service, une tension élevée est appliquée à l'élément, alors que le moteur est mis en rotation. Cela permet de déplacer le piston et conduit à la pulvérisation de gouttelettes, à travers les buses. Par ailleurs, ce dispositif fait appel à un ventilateur prévu en partie basse.

JP 57 68164 décrit un appareil d'atomisation, dans lequel un flux gazeux est soufflé. Ce flux gazeux circule à la périphérie des moyens mécaniques, assurant cette atomisation.

FR 3 045 420 décrit un dispositif de nébulisation, plus particulièrement de petite taille, apte à générer un brouillard de microgouttelettes d'un liquide.

De façon générale, il existe un besoin pour des dispositifs de génération de gouttelettes, aptes à fonctionner de manière satisfaisante lorsqu'ils sont placés dans un environnement dit perturbé, à savoir soumis à des accélérations selon les différentes directions de l'espace. On citera notamment les véhicules terrestres, notamment automobiles, mais aussi aériens ou maritimes. Par ailleurs, les dispositifs de génération de gouttelettes utilisés sur des étals doivent aussi répondre à ces contraintes. En effet un étal peut également être perturbé par des chocs et d'autres perturbations mécaniques, dans la mesure où il est entouré par des personnes susceptibles d'entrer en contact mécanique avec lui.

Cela étant précisé, la présente invention se propose de remédier aux différents inconvénients de l'art antérieur évoqués ci-dessus. Elle vise donc à proposer un dispositif de génération de gouttelettes, dont le rendement global est amélioré par rapport à l'art antérieur. Elle vise également à proposer un tel dispositif, qui permet de diffuser un brouillard formé essentiellement de fines gouttelettes.

L'invention vise par ailleurs à proposer un tel dispositif, qui présente une structure compacte, peu coûteuse, et qui se prête à une miniaturisation. L'invention vise en outre à proposer un tel dispositif, qui peut être installé selon différentes configurations. L'invention vise également à proposer un tel dispositif qui est apte à garantir une génération de gouttelettes de qualité satisfaisante même dans un environnement perturbé, à savoir lorsqu'il est soumis à des accélérations importantes selon les différentes dimensions de l'espace. L'invention vise enfin à proposer un tel dispositif, qui offre une précision de réglage satisfaisante, ainsi qu'un pilotage fiable.

### Objets de l'invention

A cet effet l'invention a tout d'abord pour objet un dispositif de génération de gouttelettes (I ; II ; III ; IV ; V ; VI ; VII ; VIII) comportant :
- un corps creux (1 ; 101 ; 201 ; 301 ; 401 ; 501 ; 601) délimitant une enceinte de nébulisation ,
- des moyens de génération de gouttelettes comprenant une buse de nébulisation (20, 22 ; 120 ; 220 ; 320 ; 420 ; 520 ; 620 ; 720), formant un organe d'admission de liquide, ladite buse de nébulisation étant pourvue d'au moins un orifice (23 ; 623) d'admission de liquide et d'au moins un orifice (21 ; 621) de sortie de liquide, ladite buse de nébulisation étant apte à générer un jet de liquide (J) à l'intérieur de ladite enceinte de nébulisation selon un trajet de génération,
- les moyens de génération de gouttelettes comprenant en outre un élément piézoélectrique (22), prévu à l'opposé dudit orifice de sortie de ladite buse, apte à émettre des ondes acoustiques dans ledit liquide pour générer des gouttelettes à partir dudit jet de liquide (J),
- des moyens de ventilation (3 ; 103 ; 203 ; 303 ; 403 ; 503 ; 603 ; 703) propres à générer un flux gazeux destiné à entraîner au moins une partie dudit liquide dans l'enceinte de nébulisation, ces moyens de ventilation comprenant un organe de ventilation (31) et un canal de ventilation (4; 104; 204; 304; 404; 504; 604; 704), s'étendant à partir dudit organe de ventilation et débouchant dans l'enceinte de nébulisation,
   ledit dispositif étant un dispositif de nébulisation (I ; II ; III ; IV ; V ; VI ; VII ; VIII) et comprenant en outre
- un passage intermédiaire (44; 144; 244; 344; 444; 544; 644; 744), le flux gazeux généré par l'organe de ventilation étant propre à s'écouler, dans le passage intermédiaire, selon un premier trajet d'écoulement différent du trajet de génération,
- des moyens de renvoi (46) propres à renvoyer le flux gazeux provenant du passage intermédiaire, radialement vers le centre de l'enceinte de nébulisation, selon un deuxième trajet d'écoulement sensiblement identique au trajet de génération,
- le passage intermédiaire (44) étant délimité par les parois en regard appartenant respectivement à un col amont (12), prévu au voisinage de l'organe d'admission (20), et à un fût aval (11) de section transversale inférieure à celle du col.

Selon d'autres caractéristiques de ce dispositif :
- vu en bout, le passage intermédiaire (44) s'étend à la périphérie extérieure de ladite buse de nébulisation,
- l'extrémité amont du passage intermédiaire (544 ; 644 ; 744) est située, selon la direction de génération, en aval de la sortie (521) dudit organe d'admission de liquide (520), la distance (D544 ; D644 ; D744) séparant, selon la direction de génération, la sortie (521) dudit organe d'admission de liquide (520) et l'extrémité amont (544') du passage intermédiaire, est comprise entre 5 et 50 millimètres, notamment entre 10 et 30 millimètres, notamment voisine de 20 millimètres,
- la section transversale du fût (11) est supérieure à la section extérieure de l'organe d'admission (20),
- le fût (11) et le col (12) sont coaxiaux et délimitent un passage intermédiaire de forme annulaire, la dimension transversale ou hauteur (H44) du passage intermédiaire, étant notamment comprise entre 5 et 20 millimètres, notamment voisine de 10 millimètres
- les moyens de renvoi comprennent des parois dites de renvoi (46) présentant une forme arrondie, dont la concavité est tournée vers l'arrière, en section longitudinale,
- le passage intermédiaire définit un trajet d'écoulement d'air, dont la direction d'écoulement d'air est sensiblement identique à la direction de génération et dont le sens d'écoulement d'air est inverse du sens de génération,
- les moyens de ventilation comprennent un module de ventilation, et il est prévu des moyens de fixation, notamment amovible du module de ventilation sur le corps dudit dispositif,
- le dispositif comprend une chambre amont (705), dite chambre commune, destinée à l'écoulement à la fois du liquide et des gouttelettes de brouillard, ce dispositif étant dépourvu de branche radiale de diffusion de gouttelettes, la chambre commune (705) étant notamment rectiligne et présentant alors un axe principal qui est confondu avec l'axe principal de l'enceinte de nébulisation,
- l'enceinte de nébulisation comprend une chambre amont (5), dite chambre commune, destinée à l'écoulement à la fois du liquide et des gouttelettes de brouillard, cette chambre s'étendant axialement, le dispositif comprend au moins une branche de diffusion de gouttelettes de brouillard (6, 7), chaque branche s'étendant radialement vers l'extérieur de cette chambre en vue de dessus, et le dispositif comprend en outre des moyens d'évacuation (8) de liquide, prolongeant ladite chambre commune, au-delà de la jonction entre la branche de diffusion et la chambre commune,
- en vue de dessus, l'angle dit caractéristique (a6, a7), formé par l'axe principal (A1) du corps creux (1) et l'axe caractéristique (A6, A7) d'une branche respective, est compris entre 5 et 60°, en particulier entre 10 et 40°, notamment voisin de 30°,
- la longueur (L5) de la chambre commune (5) est comprise entre 50 et 300 millimètres, en particulier entre 100 et 200 millimètres, notamment voisine de 150 millimètres,
- la section longitudinale d'entrée (S64, S74) de chaque branche est comprise entre 30 et 150 millimètres, en particulier entre 60 et 100 millimètres, notamment voisine de 80 millimètres,
- la section longitudinale d'entrée (S64, S74) de chaque branche est égale à une fraction de la longueur (L5) de la chambre commune (5), ladite fraction étant comprise entre 75 et 100 %, en étant comprise en particulier entre 85 et 90 %,
- la section de passage dans chaque branche diminue vers l'aval,
- il est prévu plusieurs branches, en particulier un nombre pair de branches, qui sont réparties angulairement de manière régulière autour de la chambre,
- les moyens d'évacuation comprennent un tube axial d'évacuation (8 ; 108 ; 208 ; 308 ; 408 ; 508), prolongeant ladite chambre commune au-delà de la jonction entre la branche de diffusion et la chambre commune,
- la longueur (L8) du tube d'évacuation (8) est comprise entre 10 et 100 millimètres, notamment entre 20 et 50 millimètres,
- la section de passage dans le tube d'évacuation est sensiblement constante,
- le tube d'évacuation (8) est prolongé par un embout d'évacuation (85) de section décroissante vers l'aval, cet embout d'évacuation définissant un orifice aval (86) d'évacuation de liquide,
- les moyens de diffusion comprennent en outre au moins un embout de diffusion (68, 78), prolongeant chacun une branche de diffusion respective (6, 7), ainsi que des moyens de liaison amovible et/ou orientable entre cette branche et cet embout,
- le corps (1) comprend au moins une tétine d'évacuation de liquide (45 ; 645) définissant un orifice (45' ; 645') amont d'évacuation de liquide.

L'invention a également pour objet un procédé de mise en oeuvre d'un dispositif tel que ci-dessus, dans lequel :
- on admet du liquide dans l'enceinte de nébulisation
- on fait s'écouler un jet dudit liquide à l'intérieur de ladite enceinte de nébulisation, selon un trajet de génération,
- on fait s'écouler de l'air dans le passage annulaire selon un premier trajet d'écoulement différent du trajet de génération, de sorte que cet air frappe les parois de renvoi,
- on fait ensuite s'écouler cet air dans l'enceinte de nébulisation, selon un deuxième trajet d'écoulement sensiblement identique au trajet de génération,
- on emporte au moins une fraction dudit liquide et d'un brouillard de gouttelettes formées à partir dudit liquide, au moyen de l'air s'écoulant selon le deuxième trajet d'écoulement.

Il est du mérite des inventeurs d'avoir identifié qu'au moins certains des inconvénients de FR 3 023 735 sont liés à la mise en circulation du flux gazeux, destiné à emporter le jet de liquide et les gouttelettes de brouillard formées à partir de ce jet. En effet, ce flux gazeux n'est pas homogène, en termes de direction et de vitesse d'écoulement. De façon plus précise, les filets d'air composant ce flux gazeux ne sont pas mutuellement parallèles. Par ailleurs, les vitesses de ces filets d'air sont différentes les unes des autres. Dans ces conditions, l'air s'écoulant à proximité gouttelettes de brouillard présente un caractère fortement turbulent. Cela implique que ces gouttelettes sont soumises à de nombreux chocs, non seulement contre les parois du dispositif, mais également contre des gouttelettes adjacentes. Par conséquent, il se forme des agglomérations entre ces gouttelettes, ce qui contribue à augmenter la taille de ces dernières.

Selon l'invention, le flux gazeux s'écoule, depuis le ventilateur, tout d'abord dans le passage intermédiaire prévu en périphérie de la chambre centrale. Cet écoulement est réalisé selon un trajet différent de celui du jet de liquide, ce dernier étant dénommé trajet de génération. Puis le flux gazeux est renvoyé de manière à s'écouler alors à co-courant par rapport au jet de liquide, c'est-à-dire que les trajets d'écoulement du flux gazeux et du liquide sont identiques. Au sens de l'invention le trajet d'écoulement, respectivement du flux gazeux et du liquide, englobe à la fois la direction d'écoulement et le sens d'écoulement. Par conséquent, le trajet d'écoulement du flux gazeux peut être différent du trajet d'écoulement du jet de liquide, d'une part en ce que la direction d'écoulement de ce flux est différente de la direction d'écoulement du liquide. D'autre part, le trajet d'écoulement du flux gazeux peut être différent du trajet d'écoulement du jet de liquide, en ce que ce flux gazeux et ce liquide ont la même direction d'écoulement, mas en revanche des sens d'écoulement opposé.

De la sorte, les inventeurs ont constaté que le flux gazeux présente une homogénéité très satisfaisante en amont, notamment au voisinage de l'organe d'admission de liquide, par exemple de la buse de nébulisation dans le cas où le dispositif de l'invention est de type à nébulisation. En d'autres termes, tous les filets composant ce flux présentent sensiblement la même vitesse et la même direction. Cela permet de créer un écoulement laminaire de liquide et d'air, ce qui contribue à limiter les turbulences d'air et ainsi conduire les fines gouttelettes générées vers la sortie de manière stable en termes de direction, afin d'empêcher le choc des gouttelettes entre elles et contre les parois de l'enceinte.

Les inventeurs ont également identifié l'importance de certaines valeurs dimensionnelles, caractéristiques du dispositif de l'invention. La distance séparant axialement la sortie de l'organe d'admission de liquide et la sortie du passage intermédiaire est, notamment, tout particulièrement avantageuse. Sans vouloir être lié par la théorie, en faisant varier cette distance, il a été observé que, dans les conditions d'essais, une distance de 20 mm semblait donner la plus grande quantité de brouillard généré en sortie de l'appareil. Par ailleurs, la simulation monophasique du cheminement de l'air dans une configuration identique montre une maximisation de l'homogénéité du flux d'air dans le conduit de diffusion. Cela permet de conclure qu'il est avantageux de jouer sur les paramètres géométriques pour homogénéiser le flux d'air dans le conduit, afin de minimiser les turbulences et ainsi favoriser l'extraction des gouttelettes générées.

Les avantages ci-dessus, ainsi que d'autres avantages de l'invention, apparaîtront plus clairement à la lecture de la description ci-dessous.

### Description des figures

Les figures 1 à 24 illustrent des modes de réalisation de l'invention, mais ne limitent pas la portée de l'invention.
La figure 1 est une vue en perspective éclatée, illustrant les différents éléments constitutifs d'un dispositif de génération de gouttelettes conforme à un premier mode de réalisation de l'invention, ce dispositif de génération de gouttelettes étant un dispositif de nébulisation dans l'exemple illustré ;
Les figures 2 et 3 sont des vues en perspective selon deux angles différents, illustrant le dispositif de nébulisation conforme à l'invention.
Les figures 4 et 5 sont des coupes longitudinales, illustrant le dispositif de nébulisation des figures précédentes respectivement vu de côté et de dessus.
La figure 6a est une coupe longitudinale en vue de côté, analogue à la figure 4 mais à plus grande échelle, illustrant plus particulièrement des moyens de renvoi de l'air appartenant au dispositif de nébulisation conforme à l'invention.
La figure 6b est une vue de face, selon la flèche 6b de la figure 6a illustrant la buse et les moyens de renvoi d'air du dispositif.
La figure 7 est une coupe longitudinale en vue de dessus, analogue à la figure 5 mais à plus grande échelle, illustrant plus particulièrement certaines caractéristiques géométriques du dispositif de nébulisation conforme à l'invention.
Les figures 8 et 9 sont des coupes longitudinales analogues respectivement aux figures 4 et 5, montrant l'écoulement de l'air, du liquide et des gouttelettes de brouillard à l'intérieur du dispositif de nébulisation conforme à l'invention.
La figure 10 est une vue en perspective, analogue à la figure 2, illustrant une première variante de réalisation du dispositif de nébulisation, en ce qui concerne l'admission d'air.
La figure 11 est une coupe longitudinale en vue de côté, analogue à la figure 4, illustrant le dispositif de nébulisation de la figure 10.
La figure 12 est une vue en perspective, analogue à la figure 2, illustrant une deuxième variante de réalisation du dispositif de nébulisation, en ce qui concerne l'admission d'air.
La figure 13 est une coupe longitudinale en vue de côté, analogue à la figure 4, illustrant le dispositif de nébulisation de la figure 12.
La figure 14 est une vue en perspective, analogue à la figure 2, illustrant une troisième variante de réalisation du dispositif de nébulisation, en ce qui concerne la diffusion de gouttelettes de brouillard.
La figure 15 est une coupe longitudinale en vue de côté, analogue à la figure 8, illustrant le dispositif de nébulisation de la figure 14.
La figure 16 est une coupe longitudinale en vue de côté, analogue à la figure 15, illustrant une quatrième variante de réalisation du dispositif de nébulisation, en ce qui concerne la diffusion de gouttelettes de brouillard.
La figure 17 est une vue en perspective, analogue à la figure 2, illustrant une cinquième variante de réalisation, dans laquelle le dispositif de nébulisation conforme à l'invention présente des moyens de ventilation améliorés.
Les figures 18 et 19 sont des vues respectivement en coupe longitudinale de côté et de dessus, illustrant le dispositif de nébulisation de la figure 17.
La figure 20 est une coupe longitudinale en vue de côté à plus grande échelle, analogue à la figure 6a, illustrant la partie amont du dispositif de nébulisation des figures 17 à 20.
La figure 21 est une vue en perspective, analogue à la figure 2, illustrant une sixième variante de réalisation du dispositif de nébulisation, en ce qui concerne l'admission d'air.
La figure 22 est une coupe longitudinale en vue de côté, analogue à la figure 4, illustrant le dispositif de nébulisation de la figure 21.
La figure 22a est une vue en perspective avec arrachements, illustrant le dispositif de nébulisation des figures 21 et 22.
La figure 23 est une vue en perspective, analogue à la figure 2, illustrant une septième variante de réalisation, dans laquelle la branche de diffusion du dispositif de nébulisation est confondue avec sa chambre commune d'écoulement de liquide.
La figure 24 est une coupe longitudinale en vue de côté, analogue à la figure 4, illustrant le dispositif de nébulisation de la figure 23.

Les références numériques suivantes sont utilisées dans la présente description:

| | | | |
|---|---|---|---|
| I | Dispositif de nébulisation | 1 | Corps creux |
| A1 | Axe de 1 | 11 | Fût |
| 12 | Col | 11' | Extrémité amont de 11 |
| 13 | Découpe de 12 | 14 | Ouverture frontale |
| 15 | Bride de fermeture | 16 | Joint torique |
| 17 | Téton | 18 | Sièges |
| 20 | Buse | 21 | Orifice de sortie de 20 |
| 22 | Elément piézoélectrique | 24 | Support de 22 |
| 23 | Orifices d'admission de 20 | 21 | Orifice de sortie de 20 |
| 3 | Module de ventilation | 31 | Organe de ventilation |
| 32 | Filtre à air | 33 | Organe d'injection d'air |
| 34 | Raccord | 35 | Rebords |
| 4 | Canal de ventilation | 41 | Tronçon amont de 4 |
| 42 | Tronçon aval de 4 | 44 | Passage annulaire |
| 45 | Tétine | 45' | Orifice de 45 |
| 46 | Parois de renvoi | 47',47" | Bords de 46 |
| 48 | Extrémité arrière de 46 | | |
| 5 | Chambre commune | 51,52 | Entrée / Sortie de 5 |
| S5 | Section de 5 | L5 | Longueur de 5 |
| A5 | Axe longitudinal de 5 | T5 | Axe transversal de 5 |
| 60,70 | Echancrures latérales | 6,7 | Branches |
| 61,71 | Parois amont de 6,7 | 62,72 | Parois aval de 6,7 |
| 64,74 | Entrée de 6,7 | 65,75 | Point médian de 6,7 |
| 66,76 | Sortie de 6,7 | A6,A7 | Axe de 6,7 |
| S64,S74 | Section d'entrée de 6,7 | S65,S75 | Section médiane de 6,7 |
| D61,D71 | Distance entre 21 et 61,71 | 68,78 | Embout de diffusion |
| 69,79 | Orifice de diffusion | a6,a7 | Angle des branches 6,7 |
| 8 | Tube d'évacuation | 81,82 | Entrée / Sortie de 8 |
| S8 | Section de 8 | L8 | Longueur de 8 |
| 85 | Embout d'évacuation | 86 | Orifice d'évacuation |
| F1-F3 | Ecoulement d'air | G1,G2 | Ecoulement des gouttes |
| II | Dispositif de nébulisation | 101 | Corps creux |
| 115 | Bride de fermeture | 120 | Buse |
| 103 | Module de ventilation | 104 | Canal de ventilation |
| 141 | Tronçon amont de 104 | 142 | Tronçon aval de 104 |
| 144 | Passage annulaire | 134 | Raccord |
| 105 | Chambre commune | 106,107 | Branches |
| 108 | Tube d'évacuation | 185 | Embout d'évacuation |
| 186 | Orifice d'évacuation | | |
| III | Dispositif de nébulisation | 201 | Corps creux |
| 215 | Bride de fermeture | 220 | Buse |
| 203 | Module de ventilation | 204 | Canal de ventilation |
| 241 | Tronçon amont de 204 | 242 | Tronçon aval de 204 |
| 244 | Passage annulaire | 234 | Raccord |
| 205 | Chambre commune | 206,207 | Branches |
| 208 | Tube d'évacuation | 285 | Embout d'évacuation |
| 286 | Orifice d'évacuation | | |
| IV | Dispositif de nébulisation | 301 | Corps creux |
| 315 | Bride de fermeture | 320 | Buse |
| 303 | Module de ventilation | 304 | Canal de ventilation |
| 341 | Tronçon amont de 304 | 342 | Tronçon aval de 304 |
| 344 | Passage annulaire | 334 | Raccord |
| 305 | Chambre commune | 306,307 | Branches |
| 308 | Tube d'évacuation | 385 | Embout d'évacuation |
| 386 | Orifice d'évacuation | a306 | Angle de la branche 306 |
| V | Dispositif de nébulisation | 420 | Buse |
| 415 | Bride de fermeture | 403 | Module de ventilation |
| 441 | Tronçon amont de 404 | 442 | Tronçon aval de 404 |
| 444 | Passage annulaire | 486 | Orifice d'évacuation |
| 405 | Chambre commune | 406 | Branche |
| 408 | Tube d'évacuation | 485 | Embout d'évacuation |
| VI | Dispositif de nébulisation | 520 | Buse |
| 521 | Sortie de 520 | 523 | Orifices d'admission de 520 |
| 511 | Fût | 512 | Col |
| 511' | Extrémité de 511 | 504 | Canal de ventilation |
| 541 | Tronçon amont de 504 | 542 | Tronçon aval de 504 |
| 544 | Passage annulaire | D544 | Distance entre 521 et 544' |
| 544' | Extrémité de 544 | 506,507 | Branches |
| 545 | Tétine | 545' | Orifice de 545 |
| 546 | Parois de renvoi | 547',547" | Bords de 546 |
| 548 | Extrémité arrière de 546 | | |
| VII | Dispositif de nébulisation | 601 | Corps creux |
| 620 | Buse | 621 | Sortie de 620 |
| 603 | Module de ventilation | 615 | Bride |
| 642 | Tronçon aval de ventilation | 644 | Passage annulaire |
| 605 | Chambre commune | 606,607 | Branches |
| 608 | Tube d'évacuation | 685 | Embout d'évacuation |
| 686 | Orifice d'évacuation | D644 | Distance entre 621 et 644 |
| VIII | Dispositif de nébulisation | 701 | Corps creux |
| 720 | Buse | 721 | Sortie de 720 |
| 711 | Fût | 712 | Col |
| 703 | Module de ventilation | 741 | Tronçon amont de ventilation |
| 742 | Tronçon aval de ventilation | 744 | Passage annulaire |
| 705 | Chambre commune | 715 | Bride de fermeture |
| D744 | Distance entre 721 et 744 | 785 | Embout d'évacuation |
| 786 | Orifice d'évacuation | 711' | Sortie principale |

### Description détaillée

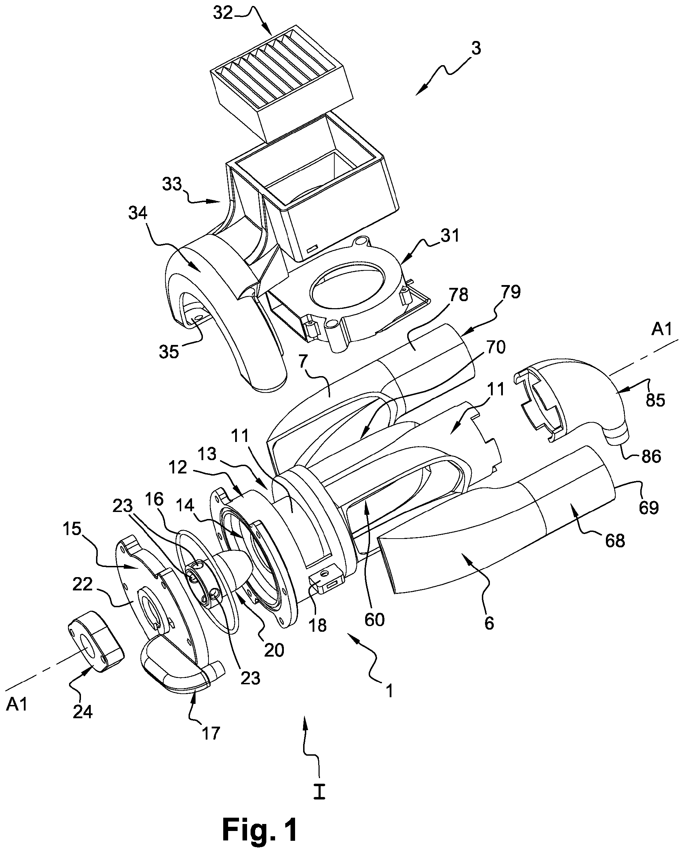

Les figures 1 à 9 illustrent un dispositif de génération de gouttelettes conforme à un premier mode de réalisation de l'invention, lequel est à titre d'exemple non limitatif un dispositif de nébulisation désigné dans son ensemble par la référence I. Ce dispositif I comprend tout d'abord un corps creux allongé 1, qui délimite une enceinte de nébulisation. On note A1 l'axe longitudinal principal de ce corps et de cette enceinte, lequel correspond à l'axe de la buse équipant le dispositif, comme on le verra ci-après. Cet axe principal A1 est sensiblement horizontal, dans l'exemple illustré. Cependant, comme cela sera expliqué dans ce qui suit, cet axe peut être oblique ou vertical. Dans ce qui suit les termes « avant » et « arrière », synonymes des termes respectivement « aval » et « amont », sont définis en référence à l'écoulement de fluide dans le corps creux.

Le corps comporte un fût principal 11 et un col secondaire 12, de plus grande section transversale, s'étendant vers l'arrière à partir du fût principal. Ce fût et ce col, qui sont cylindriques de section globalement circulaire, sont concentriques dans l'exemple illustré et s'étendent tous deux selon l'axe principal A1 ci-dessus. On note 11' l'extrémité amont, à savoir adjacente à la buse 20, du fût 11. Cette extrémité 11' est située en amont, à savoir en arrière, par rapport à la sortie de cette buse.

Le col 12 est creusé d'une découpe latérale 13, s'étendant sur une partie de la périphérie de ce col. Dans l'exemple illustré, cette découpe s'étend environ sur la moitié du col, soit un secteur angulaire d'environ 180°. Cette découpe permet de délimiter un siège pour la réception de moyens de ventilation, décrits plus en détail par la suite. On notera que cette découpe est ménagée globalement sur la partie supérieure du corps 1, ce qui permet d'éviter que l'eau ne s'échappe par gravité, hors du volume intérieur de ce corps. Le col 12 précité est en outre pourvu d'une ouverture arrière frontale 14, obturée au moyen d'une bride de fermeture 15 avec interposition d'un joint torique 16. Cette bride est percée d'un trou, dans lequel s'étend une buse de concentration 20, de type connu en soi.

La buse 20, qui forme un organe d'admission de liquide dans l'enceinte de nébulisation, possède une paroi latérale interne délimitant un volume intérieur apte à contenir le liquide à pulvériser. La section transversale intérieure de cette paroi présente un rétrécissement progressif en direction d'un orifice 21 de sortie du liquide. A l'opposé de cet orifice 21, le volume intérieur précité est fermé par un élément (céramique) piézo-électrique 22, associé à un support 24. La bride précitée 15 est en outre pourvue d'un téton 17, de type connu en soi, qui peut être connecté à une conduite non représentée, destinée à l'alimentation en liquide en direction du volume intérieur de la buse 20.

L'élément 22 est apte à émettre des ondes acoustiques dans le liquide. La paroi interne de ladite buse est typiquement en un matériau dur apte à réfléchir les ondes acoustiques générées par ledit élément piézo-électrique 22. Un tel matériau présente typiquement une impédance acoustique, qui est suffisamment différente de celle de l'eau afin de réfléchir les ondes acoustiques. La forme convergente des parois internes de la buse 20 est déterminée de manière à faire focaliser les ondes acoustiques ultra-soniques à un endroit proche de la partie centrale de l'orifice de sortie 21. Cela permet de générer un brouillard de micro-gouttelettes du liquide à pulvériser lorsque la buse est remplie de liquide et lorsque la céramique 22 émet des ondes acoustiques de fréquence et intensité appropriées. La forme convergente des parois internes de la buse est avantageusement parabolique, ce qui améliore le rendement. De manière préférée, la forme des parois internes de la buse 20 montre une symétrie radiale.

D'une manière générale, l'élément céramique piézo-électrique 22 est de préférence de forme cylindrique, typiquement une plaquette de forme circulaire. A titre d'exemple non limitatif, il peut avoir un diamètre compris entre 10 mm et 30 mm, notamment entre 20 mm et 25 mm. L'orifice de sortie 21 a de préférence une forme circulaire. Dans un mode de réalisation, son diamètre est compris entre 2 et 10 mm, et avantageusement entre 4 et 6 mm. La hauteur intérieure de la buse est typiquement comprise entre 20 mm et 50 mm, typiquement voisine de 30 mm, sachant que cette distance correspond au champ proche des ultrasons générés par la céramique piézo-électrique 22.

De manière connue, la buse 20 comporte au moins un orifice d'admission de liquide permettant d'admettre le liquide à pulvériser dans le volume intérieur de la buse. On peut notamment prévoir des trous d'admission de liquide, ou bien un décalage vertical de la buse, maintenue par une première extrémité, qui permet une admission annulaire de liquide sur toute la partie située à l'extrémité opposée de cette buse. De manière préférée, une pluralité d'orifices d'admission sont aménagés autour de l'axe longitudinal de la buse, dans une zone proche de l'élément céramique piézo-électrique. Dans le présent exemple de réalisation, on retrouve quatre orifices d'admission 23 régulièrement répartis à la périphérie de la buse. La section d'admission de la buse 20, à savoir la somme des surfaces des orifices d'admission, est avantageusement supérieure à la section de l'orifice de sortie, de préférence au moins trois fois supérieure, afin de prévenir un manque d'eau et d'éviter le phénomène de cavitation dans la buse.

De façon connue en soi, la paroi latérale externe de la buse délimite, avec les faces en regard du corps, une zone de mise en pression pour le liquide. En service, cette dernière est en permanence remplie de liquide, ce qui garantit un fonctionnement optimal de l'élément piézoélectrique, même dans des conditions perturbées. De plus, cette zone de mise en pression communique avec le volume intérieur de la buse, via les orifices d'admission 23. La présence de la bride 15 est avantageuse, puisqu'elle permet tout d'abord de fermer la zone de mise en pression avec une étanchéité particulièrement satisfaisante. De plus, elle assure une fixation amovible de l'élément piézoélectrique, lequel peut donc être remplacé de manière simple et rapide.

Cette zone de mise en pression est alimentée en liquide grâce au téton précité 17, depuis un volume de collecte non représenté. La géométrie, les dimensions et l'emplacement de ce volume de collecte sont choisis en fonction de l'environnement, dit cible, dans lequel est implanté le dispositif de nébulisation selon l'invention. La circulation de liquide, depuis le volume de collecte en direction de la zone de mise en pression, est assurée de manière classique par au moins une pompe de type connu, qui n'est pas non plus représentée sur les figures.

La fréquence d'ultrasons est avantageusement comprise entre 1,3 MHz et 3 MHz, notamment entre 1,7 MHz et 2,4 MHz. L'élément piézo-électrique peut typiquement absorber une puissance électrique importante, dont une fraction est rendue sous forme d'énergie acoustique transmise au liquide, le reste étant dissipé sous forme thermique. On notera que, en service, l'élément piézo-électrique est constamment recouvert par le liquide ce qui évite sa détérioration par surchauffe.

Lorsque l'élément piézo-électrique 22 fonctionne à sec même pour une très courte durée, il risque d'être endommagé ou même être détruit. Pour éviter cela, on prévoit avantageusement des moyens permettant d'empêcher que ledit élément piézoélectrique ne fonctionne (i.e. n'émette pas d'ondes acoustiques ou seulement des ondes acoustiques de très faible puissance) lorsque l'élément piézo-électrique n'est pas immergé dans le liquide à pulvériser. Ces moyens, qui ne sont pas représentés sur les figures, peuvent prendre différentes formes.

De manière générale, on peut prévoir au moins un moyen de détection du manque de liquide et/ou un moyen de détection de l'échauffement de l'élément piézo-électrique et un moyen de rétroaction sur l'alimentation électrique dudit élément piézo-électrique. Ledit moyen de détection du manque de liquide peut être un capteur de niveau, un capteur à ultrasons, ou un capteur de présence qui coupe ou régule le fonctionnement de l'élément piézo-électrique. Ce capteur peut être un capteur optique ou un capteur capacitif ou encore un capteur inductif. Ce capteur peut être placé en tout emplacement approprié, dans le dispositif de nébulisation ou à sa périphérie.

Ledit moyen de détection du manque de liquide peut être un capteur qui détecte la présence du jet de liquide en sortie de l'orifice de sortie de la buse. Ce moyen est moins préféré car il entraîne un retard dans la détection d'un défaut d'immersion dudit élément piézo-électrique. Ledit moyen de détection du manque de liquide peut être un capteur de pression dans la buse et/ou à la sortie de la pompe de circulation. Un autre moyen pour détecter le manque de liquide dans la buse est un détecteur de la température à la surface et/ou à l'intérieur dudit élément piézo-électrique, ce qui permet de détecter l'échauffement rapide dudit élément piézo-électrique avant qu'il n'ait subi des dégâts importants.

Les moyens de ventilation sont réalisés sous forme d'un module de ventilation 3, lequel peut être fixé, notamment de manière amovible, sur le siège formé par les bords de la découpe 13, ménagée dans le col 12. Ce module comprend un organe actif de ventilation 31, ou ventilateur, de type connu en soi, qui est apte à souffler un flux gazeux, typiquement de l'air. Ce module comprend en outre un filtre à air 32, également de type classique. Le module 3 comprend enfin un organe d'injection d'air 33, qui permet de canaliser l'air provenant du ventilateur 31, en direction du volume intérieur du corps 1.

Cet organe 33 est muni d'un raccord 34, présentant une forme de demi-cercle en vue de face. Ce raccord 34 est propre à être plaqué contre les bords de la découpe 13, avec interposition de moyens d'étanchéité non représentés. A cet effet, des rebords 35, présents aux deux extrémités latérales du raccord 34, sont fixées sur des plots 18, formant sièges, prévus sur la face extérieure du col 12. La fixation mutuelle entre le raccord 34 et les plots 18 du corps 1 est avantageusement amovible, notamment grâce à des moyens de vissage non représentés. A titre d'exemple non limitatif, on peut prévoir d'utiliser une vis passant à travers le plot 18, laquelle vient se visser dans le raccord 34 au niveau de trous filetés, ménagés dans le rebord 35. A titre de variante, on peut prévoir tout type de moyens de fixation, en particulier tout type de moyens de fixation de type amovible.

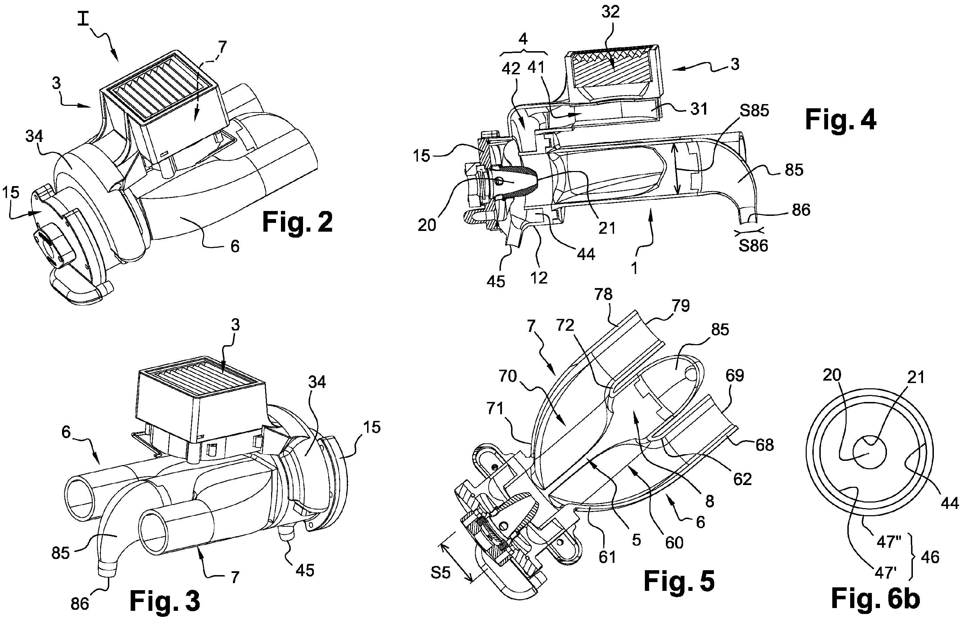

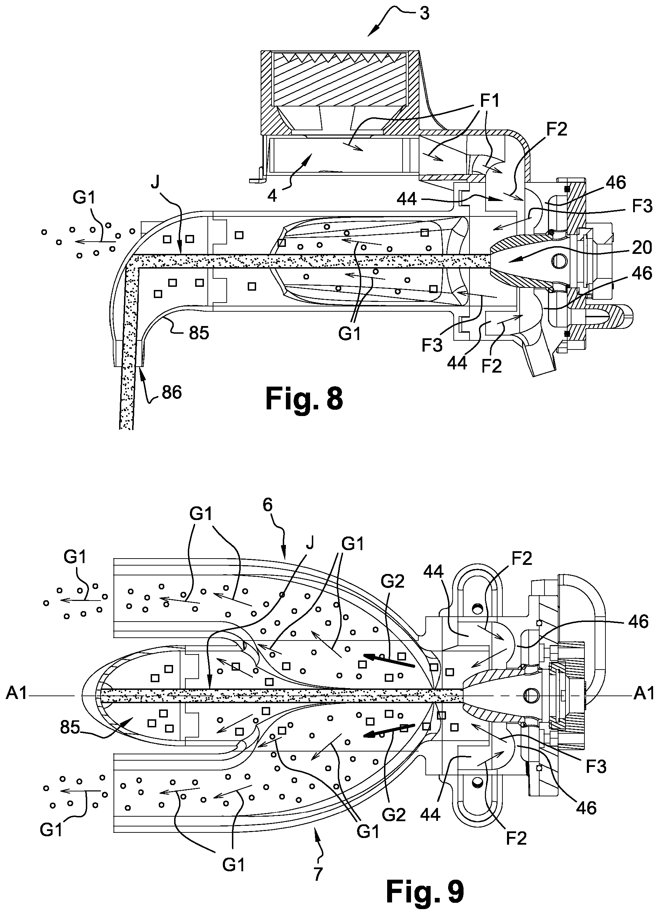

Comme le montrent notamment les figures 4 et 8, le ventilateur souffle en service de l'air à travers un canal dit de ventilation 4, ménagé dans l'organe d'injection 33. Ce canal possède un tronçon amont rectiligne 41, lequel s'étend axialement au-dessus de la face supérieure du fût principal. Ce tronçon amont se prolonge en un tronçon aval 42, qui s'étend selon une portion de couronne à l'intérieur du raccord 34. Ce tronçon aval débouche enfin dans un passage annulaire 44, délimité par les parois en regard du col 11 et du fût 12. Comme on le verra dans ce qui suit, ce passage 44 débouche dans l'enceinte de nébulisation. Par ailleurs, le col 12 est équipé d'une tétine 45 définissant un orifice amont d'évacuation 45', dont la fonction sera précisée dans ce qui suit.

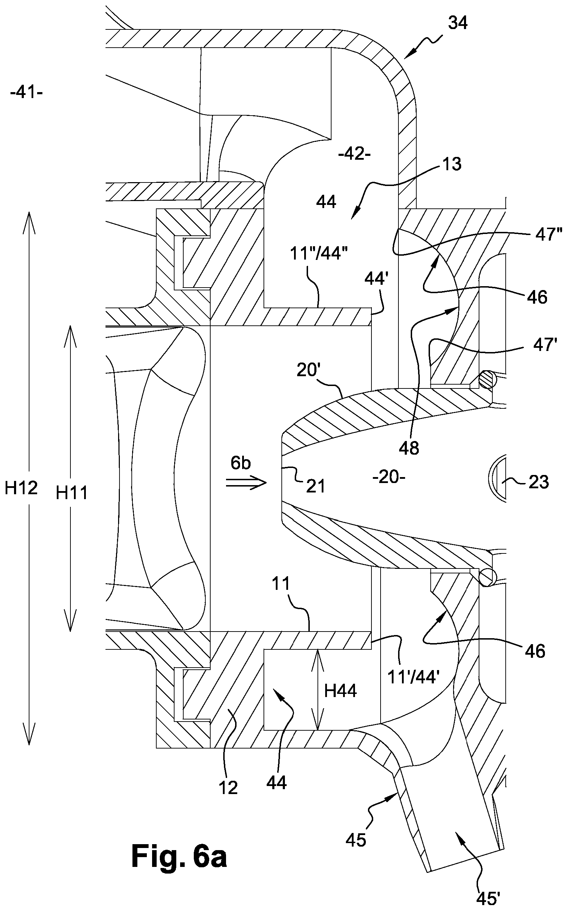

Le dispositif de nébulisation comprend en outre des moyens de renvoi, permettant de modifier la direction d'écoulement du flux gazeux depuis le passage annulaire vers le voisinage de la buse. Ces moyens de renvoi, qui sont illustrés notamment à plus grande échelle sur les figures 6a et 6b, comprennent des parois dites de renvoi 46. Vues de face, comme montré en figure 6b, ces parois 46 forment une couronne dont on note 47' et 47" les bords respectivement radialement intérieur et extérieur. En section longitudinale, comme montré en figure 6a, ces parois de renvoi présentant une forme arrondie, dont la concavité est tournée vers l'arrière.

On note 48 l'extrémité arrière de cette couronne 46, et on note que le bord intérieur 47' est situé en arrière du bord extérieur 47". Par ailleurs, vus de face, ce bord intérieur 47' et ce bord extérieur 47" sont situés de part et d'autre du bord intérieur 44" du passage 44, qui correspond à la face extérieure 11" du fût 11. Comme montré en figure 6b, cette couronne de renvoi 46 est située en périphérie de la buse 20. La forme de ces parois de renvoi permet de réduire les arêtes vives et, par conséquent, de limiter les perturbations du flux d'air ainsi que les turbulences.

Des valeurs dimensionnelles avantageuses, caractéristiques du dispositif de nébulisation conforme à l'invention, sont les suivantes (voir figures 6a et 6b):
- la section de passage, ou hauteur H44, du passage intermédiaire est comprise entre 5 et 20 mm, notamment voisine de 10 mm,
- la section transversale ou hauteur H11 du fût, au niveau de son extrémité amont, est comprise entre 25 et 55 mm, notamment entre 30 et 40 mm.

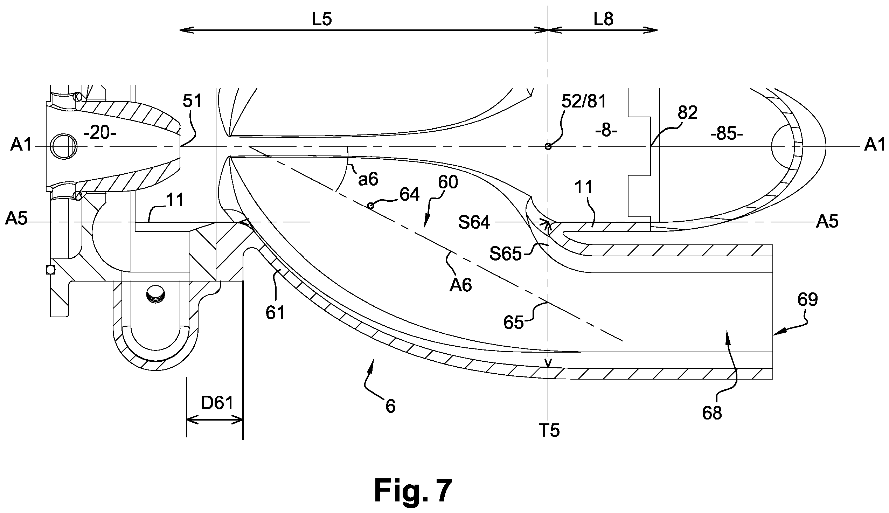

Comme illustré notamment sur la figure 7, l'axe longitudinal de la buse 20 est sensiblement parallèle à l'axe principal A1 du corps, à savoir qu'il est globalement horizontal dans l'exemple illustré. Selon l'invention, on peut prévoir que cet axe longitudinal soit incliné par rapport à l'horizontale, voire vertical. De façon préférée cet axe de la buse forme, par rapport à l'horizontale, un angle compris entre -30° et +30°, notamment entre -15° et +15°. La valeur de cet angle est considérée « au repos », à savoir lorsque le dispositif selon l'invention est monté sur un support, comme un véhicule ou un étal, qui repose sur un sol horizontal en l'absence de perturbation dynamique.

En référence à nouveau à la perspective éclatée de la figure 1, le fût 11 du corps 1 est creusé de deux échancrures latérales 60 et 70, à partir desquelles s'étendent deux branches 6 et 7. Ces dernières peuvent être réalisées d'un seul tenant avec le fût, ou bien on peut prévoir des moyens de fixation amovible, de tout type approprié comme notamment par encliquetage, entre les parois des échancrures et les branches respectives. Dans le cas où les branches 6 et 7 sont fixées de manière amovible, les moyens de fixation doivent être étanches.

On note 61 et 71 les parois des branches 6 et 7, qui sont adjacentes à la buse 20. Ces parois 61 et 71 sont dénommées amont, en référence à leur positionnement par rapport à la buse, ou encore extérieure en référence au volume de chaque branche. On note en outre 62 et 72 les parois des branches 6 et 7, qui sont opposées à la buse 20. Ces parois 62 et 72 sont dénommées aval, en référence à leur positionnement par rapport à la buse, ou encore intérieure en référence au volume de chaque branche.

Ces branches 6 et 7 délimitent différentes régions fonctionnelles de l'enceinte de nébulisation, appartenant au dispositif de nébulisation I conforme à l'invention :
- une chambre amont 5, ou chambre commune, destinée à l'écoulement du liquide et de gouttelettes formées à partir de ce liquide. On note 51 l'entrée de cette chambre, qui correspond à la sortie de la buse 20, et 52 la sortie de cette chambre, qui correspond à la jonction entre chaque paroi aval 62, 72 de chaque branche 6, 7 et le fût 11. On note S5 la section de passage de cette chambre, selon une direction perpendiculaire à l'axe principal A1. Cette section S5, qui est sensiblement constante dans l'exemple illustré, est égale à la valeur H11 décrite ci-dessus, à savoir comprise entre 25 et 55 mm, en particulier entre 30 et 40 mm. La longueur L5 de cette chambre, qui correspond à la distance entre son entrée et sa sortie selon l'axe A1, est avantageusement comprise entre 50 et 500 mm, en particulier entre 50 et 150 mm, avantageusement entre 75 et 125 mm, notamment voisine de 100 mm,

- un tube 8 dit d'évacuation, prolongeant de manière coaxiale la chambre 5 à l'opposé de la buse 20. Ce tube est destiné à l'écoulement du liquide non nébulisé, auquel est éventuellement mélangée une fraction de gouttes de grande taille, encore nommées grosses gouttes. On note S8 la section de passage de ce tube, selon une direction perpendiculaire à l'axe principal A1. Cette section S8 est avantageusement voisine de celle S5 de ladite chambre. On note 81 l'entrée de ce tube, qui correspond à la sortie 52 de la chambre, et 82 la sortie de de ce tube. La longueur L8 de ce tube, qui correspond à la distance entre son entrée et sa sortie selon l'axe A1, est avantageusement comprise entre 10 et 50 mm, en particulier entre 10 et 30 mm, notamment voisine de 20 mm,
- un embout 85 dit d'évacuation prolonge le tube 8, à l'opposé de la chambre 5. Cet embout 85 peut être, selon un premier mode de réalisation, réalisé d'un seul tenant avec le tube 8. De façon préférée on peut prévoir des moyens de fixation amovible, de tout type approprié comme notamment par encliquetage, entre ces deux éléments mécaniques, du moment que cette liaison est étanche. Cet embout est terminé par un orifice 86, dit d'évacuation. La section de passage de l'embout décroît, de préférence de manière continue, en direction de cet orifice terminal 86. Cet orifice est mis en communication avec une conduite non représentée, assurant de manière connue l'évacuation du liquide vers le volume de collecte. De manière typique la section de l'orifice 86, qui correspond à celle de la conduite précitée, est voisine de 10 mm. Cela permet d'assurer une bonne évacuation gravitaire du liquide, au débit de fonctionnement nominal de la pompe assurant la circulation de ce liquide.

Chaque branche 6, 7 s'étend de manière oblique, à savoir d'une part radialement vers l'extérieur à partir de la chambre 5 et, d'autre part, axialement vers l'aval, c'est-à-dire à l'opposé de la buse 20. Les termes géométriques ci-dessus font référence à une vue dite de dessus, c'est-à-dire perpendiculairement à un plan s'étendant d'arrière en avant de l'ensemble du dispositif. Chaque branche est destinée à l'écoulement essentiellement de gouttelettes de petite taille, encore nommées fines gouttes. On note 64, 74 son entrée, qui correspond au point médian entre les faces en regard de ses parois extérieure et intérieure, selon l'axe longitudinal A5 (identifié sur la figure 7 en référence à l'entrée 64) passant par la paroi intérieure de la chambre. On note 65, 75 son point dit médian ou caractéristique, qui correspond au point médian entre les faces en regard de ses parois extérieure et intérieure, selon l'axe transversal T5 passant par la sortie 52 de la chambre commune 5. On note A6 et A7 l'axe caractéristique de chaque branche, qui relie son entrée 64, 74 à son point caractéristique 65, 75.

Pour chaque branche :
- l'angle dit caractéristique a6 et a7, formé par l'axe principal A1 et l'axe caractéristique A6 ou A7, est avantageusement compris entre 5 et 60°, en particulier entre 10 et 40°, notamment voisin de 30°,
- la section longitudinale d'entrée S64 ou S74, à savoir la distance séparant selon l'axe A1 les parois en regard au niveau de l'entrée 64 ou 74, est avantageusement comprise entre 30 et 150 mm, en particulier entre 60 et 100 mm, notamment voisine de 80 mm. Cette section S64 ou S74 correspond à une fraction de la longueur L5, comprise entre 75 et 100 %, en particulier entre 85 et 90 % de cette longueur L5,
- la section transversale d'entrée, à savoir la distance séparant selon l'axe vertical les parois en regard de la branche au niveau de l'entrée 64 ou 74, est avantageusement comprise entre 20 et 50 mm,
- la section médiane S65 ou S75, à savoir la distance séparant transversalement les parois en regard au niveau du point 65 ou 75, est avantageusement inférieure à la section longitudinale d'entrée S64 ou S74, telle que définie ci-dessus. Cette section médiane est typiquement voisine de la section de l'embout de diffusion 68, 78, lequel va être décrit dans ce qui suit,
- la distance D61 ou D71, séparant longitudinalement la sortie de buse et la paroi amont 61 ou 71, au niveau de sa face interne, est avantageusement comprise entre 1 et 50 mm, en particulier entre 5 et 20 mm.

Sur la figure 7 on a illustré uniquement les valeurs caractéristiques de la branche 6. Les valeurs caractéristiques de la branche 7 sont identiques, dans la mesure où les deux branches sont mutuellement symétriques par rapport à l'axe principal A1.

Chaque branche 6, 7 est prolongée, à l'opposé de la buse 20, par un embout respectif, dénommé embout de diffusion 68, 78. Cet embout, qui s'étend à partir de la sortie de chaque branche, est muni d'un orifice terminal 69, 79, dénommé orifice de diffusion, par lequel le brouillard est diffusé dans l'environnement cible. Les dimensions et/ou l'orientation de cet embout sont adaptés à cet environnement cible, notamment à la géométrie et à l'encombrement de ce dernier. On peut prévoir que chaque embout est fixé de manière permanente, ou bien avantageusement amovible, par rapport à la branche sur laquelle il est monté. On peut prévoir également une liaison étanche, par exemple de type soufflet, permettant de modifier l'orientation de cet embout par rapport à cette branche.

Les valeurs ci-dessus sont considérées dans la position de repos, telle que définie ci-dessus. Les altitudes des orifices sont prises au centre de ces derniers. Les distances sont prises entre les faces en regard des éléments mécaniques considérés.

Les figures 8 et 9 montrent de manière schématique le fonctionnement du dispositif de nébulisation conforme à l'invention, tel que décrit ci-dessus. On remplit tout d'abord le volume de collecte, de façon connue en soi. Puis on met en marche la pompe de circulation, de sorte que le liquide remplit progressivement le volume intérieur du corps 1. Le liquide est ensuite admis dans la buse 20, via les orifices d'admission 23. Un jet J de liquide s'écoule alors selon l'axe A1 à partir de l'orifice de sortie 21, à savoir de manière globalement horizontale dans l'exemple. L'élément piézoélectrique est ensuite mis en service, de manière à générer des gouttelettes de brouillard s'écoulant dans le volume intérieur du corps, comme cela va être détaillé dans ce qui suit.

On actionne par ailleurs, typiquement de façon continue, le ventilateur 31 de manière à générer un flux d'air dont le trajet est illustré sur les figures 6a, 8 et 9. Cet air s'écoule tout d'abord dans le canal de ventilation 4 selon les flèches F1, sensiblement à contre-courant du jet de liquide J. Puis cet air subit un premier changement de direction, avant d'être admis dans le passage annulaire 44 selon les flèches F2. Dans ce passage 44, le trajet d'écoulement d'air présente une direction d'écoulement d'air sensiblement identique à la direction de nébulisation. Ces deux directions sont définies par l'axe A1, à savoir globalement horizontales dans l'exemple illustré. En revanche, le sens d'écoulement d'air dans le passage 44 est inverse du sens de nébulisation, à savoir que l'air s'écoule de gauche à droite sur les figures 6a, 8 et 9, alors que le jet de liquide s'écoule de droite à gauche sur ces mêmes figures.

A l'extrémité aval du passage 44, l'air frappe alors les parois de renvoi 46, décrites ci-dessus. La forme arrondie de ces parois assure un deuxième changement de direction du flux d'air, sans cependant générer de trop fortes turbulences. L'air s'écoule enfin dans la chambre commune 5 selon la flèche F3, au voisinage de la buse, sensiblement à co-courant du jet de liquide. On notera que les filets élémentaires de cet écoulement d'air sont particulièrement homogènes, à la fois en termes de direction et de vitesse.

Un brouillard de gouttelettes, qui est formé sous l'action de l'élément piézo-électrique, est emporté par le flux d'air précité. Ce brouillard est formé par un mélange de gouttelettes dites fines, dont le diamètre est inférieur à environ 5 micromètres, et de gouttelettes dites grosses dont le diamètre est supérieur à cette dernière valeur. Sur les figures 8 et 9, les fines gouttelettes sont par illustrées par des cercles de faible dimension, alors que leur direction d'écoulement est matérialisée par les flèches G1. Par ailleurs, les grosses gouttelettes sont par illustrées par des carrés de plus grande dimension que celle des cercles ci-dessus, alors que leur direction d'écoulement est matérialisée par les flèches G2.

Les gouttelettes fines sont, en grande majorité, dirigées vers chaque branche 6, 7, avant d'être diffusées dans l'environnement par les embouts de diffusion. Comme expliqué ci-dessus, ces fines gouttes ne subissent pas de chocs significatifs contre les parois, en particulier grâce à la valeur de l'angle a6, a7 formé entre chaque branche et la chambre commune 5. En revanche, le jet de liquide J s'écoule axialement dans la chambre commune 5 puis dans le tube d'évacuation 8. Ce liquide est alors dirigé, via l'embout d'évacuation 85, vers l'orifice de sortie 86 puis le volume de collecte, avant d'être recyclé vers l'entrée de la buse. Ce liquide peut être mélangé à une faible fraction de grosses gouttelettes, lesquelles sont sensiblement absentes à l'intérieur des branches de diffusion.

La présence de l'embout 85, de section décroissante vers l'aval, présente des avantages spécifiques. En effet elle permet d'éviter l'obstruction intempestive de la chambre commune 5, avec du liquide provenant de la fraction non nébulisée du jet J. Cet embout 85 coopère avantageusement en combinaison avec la tétine 45, puisque cette dernière assure également une fonction d'évacuation de liquide. Cette tétine trouve en particulier son application lorsque le liquide a tendance à stagner, notamment par gravité, également au voisinage de la partie amont du corps 1.

Cette tétine 45 et cet embout 85 assurent tous deux une fonction d'évacuation du liquide. De manière plus précise, lorsque le dispositif est globalement à plat, la majorité du liquide est évacuée par l'embout 85, alors qu'une plus faible fraction de ce liquide est évacuée par la tétine 45. Lorsque le dispositif est orienté vers le haut, à savoir que l'entrée 51 de la chambre 5 est située à une altitude inférieure à celle de sa sortie 52, la grande majorité du liquide est évacuée par la tétine 45 alors que l'embout 85 permet éventuellement l'évacuation d'une très faible fraction de ce liquide. Par ailleurs lorsque le dispositif est orienté vers le bas, à savoir que l'entrée 51 est située à une altitude supérieure à celle de la sortie 52, sensiblement la totalité du liquide est évacuée par l'embout 85.

Lorsque le niveau de liquide tel que détecté par le capteur de présence d'eau est insuffisant pour assurer que l'élément piézo-électrique 22 est totalement immergé, une boucle de rétroaction interrompt ou diminue le fonctionnement de cet élément piézo-électrique. Si cette baisse de niveau se prolonge au-delà d'une certaine durée, de l'eau est rajoutée dans le volume intérieur de l'enceinte. L'ajout d'eau peut aussi se faire de manière permanente, de manière continue ou discontinue, par exemple à l'aide d'une pompe péristaltique (non montrée sur les figures), afin de compenser la perte d'eau due à la nébulisation.

Selon une variante avantageuse, on peut prévoir de mesurer, de façon continue ou à intervalles réguliers, la vitesse de rotation de la pompe. Si on constate une brusque augmentation de cette vitesse, ceci peut signifier que la pompe tourne, non plus dans l'eau, mais dans l'air. En d'autres termes, la quantité de liquide présente dans le dispositif est insuffisante. La boucle de rétroaction précitée agit sur l'élément piézoélectrique, de manière analogue à celle décrite au paragraphe précédent.

Selon une autre variante avantageuse, on peut prévoir de mesurer, de façon continue ou à intervalles réguliers, la puissance de l'élément piézoélectrique. Si on constate un brusque changement de cette puissance, ceci peut signifier qu'il y a un manque d'eau dans la buse ou dans le bac sous pression. On ajuste alors le débit de la pompe, de manière à ajuster le débit d'eau en fonction de la puissance acoustique (le débit de la pompe doit avantageusement être augmenté en fonction de la puissance électrique envoyé à l'élément piézoélectrique).

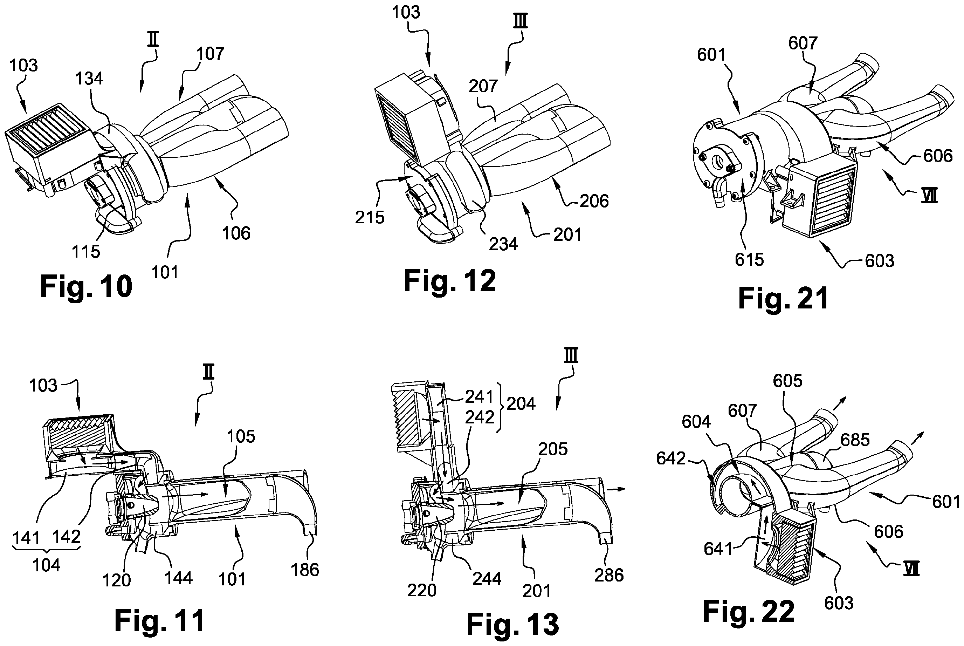

Les figures 10 et 11 illustrent un deuxième mode de réalisation du dispositif de nébulisation, conforme à l'invention. Sur ces figures, les éléments mécaniques analogues à ceux des figures 1 à 9 y sont affectés des mêmes numéros de référence, augmentés de 100.

Le dispositif de nébulisation Il de ce deuxième mode de réalisation diffère de celui I du premier mode de réalisation, notamment en ce que son canal de ventilation 104 présente un tronçon amont 141 situé en arrière de la buse 120. Dans ces conditions, l'air s'écoule sensiblement à co-courant du jet de liquide J dans ce tronçon 141, avant d'être renvoyé radialement vers l'intérieur par les parois du tronçon aval 142. L'air débouche ensuite dans le passage annulaire 144, avant d'être admis dans la chambre commune 105.

Les figures 12 et 13 illustrent un troisième mode de réalisation du dispositif de nébulisation, conforme à l'invention. Sur ces figures, les éléments mécaniques analogues à ceux des figures 1 à 9 y sont affectés des mêmes numéros de référence, augmentés de 200.

Le dispositif de nébulisation III de ce troisième mode de réalisation diffère de celui I du premier mode de réalisation, notamment en ce que son canal de ventilation 204 présente un tronçon amont 241 s'étendant radialement vers l'extérieur à partir du corps 201. Dans ces conditions, l'air s'écoule sensiblement à courant croisé par rapport au jet de liquide J dans ce tronçon 241, avant d'être renvoyé vers l'arrière par les parois du tronçon aval 242. L'air débouche ensuite dans le passage annulaire 244, avant d'être admis dans la chambre commune 205.

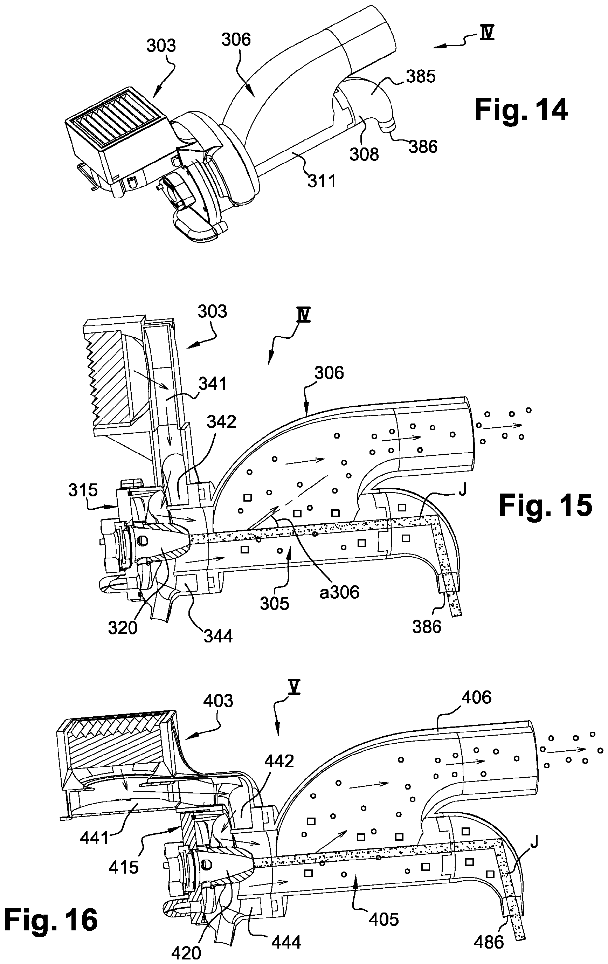

Les figures 14 et 15 illustrent un quatrième mode de réalisation du dispositif de nébulisation, conforme à l'invention. Sur ces figures, les éléments mécaniques analogues à ceux des figures 1 à 9 y sont affectés des mêmes numéros de référence, augmentés de 300.

Le dispositif de nébulisation IV de ce cinquième mode de réalisation diffère de celui I du premier mode de réalisation, notamment en ce qu'il est pourvu d'une unique branche 306, s'étendant de manière oblique à partir du fût 311. Dans cet exemple, cette branche 306 est placée au-dessus du fût, à savoir au voisinage des moyens de ventilation 303. Pour cette raison, on préfère utiliser une alimentation en air telle que celle du dispositif II des figures 10 et 11. La valeur de l'angle a306 est située dans une plage de valeurs, telle que celle de l'angle a6 décrit ci-dessus.

La figure 16 illustre un cinquième mode de réalisation du dispositif de nébulisation, conforme à l'invention. Sur cette figure, les éléments mécaniques analogues à ceux des figures 1 à 9 y sont affectés des mêmes numéros de référence, augmentés de 400.

Le dispositif de nébulisation V de ce cinquième mode de réalisation est similaire à celui IV décrit immédiatement ci-dessus, à savoir qu'il est pourvu d'une unique branche 406. L'alimentation en air est analogue à celle du dispositif III des figures 12 et 13.

A titre de variante supplémentaire, non représentée, on peut prévoir plus de deux branches, en particulier réparties angulairement de façon régulière. A titre d'exemple on peut prévoir trois branches, espacées deux à deux angulairement de 120°, ou bien quatre branches espacées deux à deux angulairement de 90°. A titre de variante supplémentaire, on peut prévoir une unique branche, qui s'étend de manière annulaire en périphérie du tube d'écoulement.

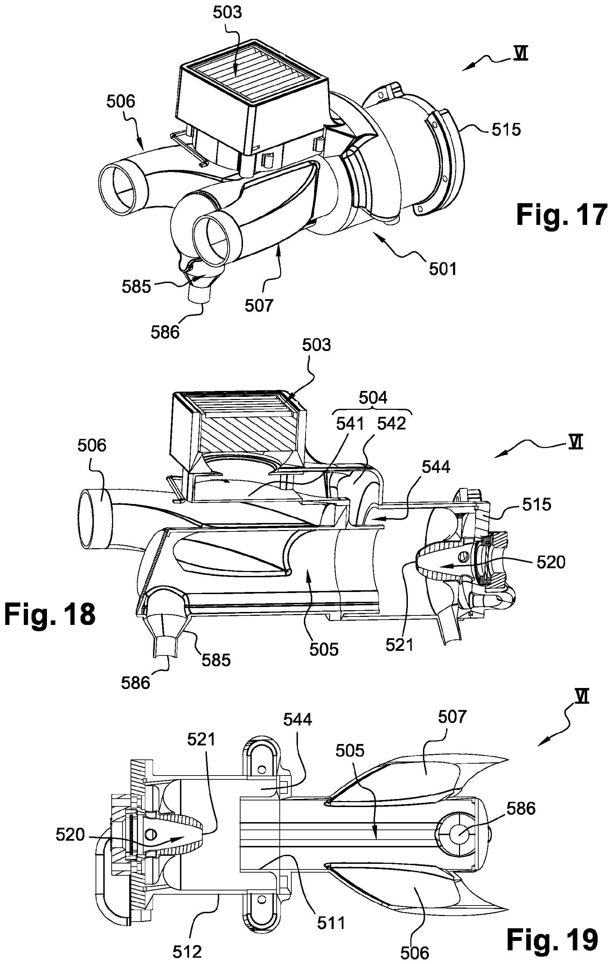

Les figures 17 à 20 illustrent un sixième mode de réalisation du dispositif de nébulisation, conforme à l'invention. Sur ces figures, les éléments mécaniques analogues à ceux des figures 1 à 9 y sont affectés des mêmes numéros de référence, augmentés de 500.

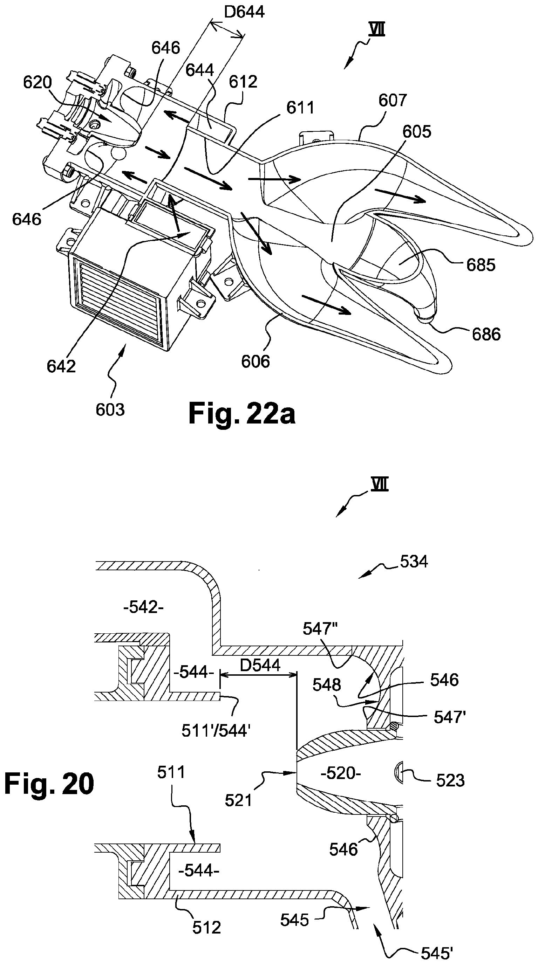

Le dispositif de nébulisation VI de ce sixième mode de réalisation diffère de celui I en ce que l'extrémité amont 544' du passage annulaire 544 est située en aval de la sortie 521 de la buse 520, comme montré notamment à grande échelle sur la figure 20. De manière avantageuse la distance D544 séparant, selon la direction de nébulisation, la sortie 521 de la buse 520 et l'extrémité amont 544' du passage intermédiaire 544 est comprise entre 10 et 30 mm, notamment entre 15 et 25 mm. Cette extrémité 544' correspond à l'extrémité amont 511' du fût 511.

Ce dispositif VI diffère également de celui I, en ce qu'il est dépourvu de tube d'évacuation s'étendant dans le prolongement de la chambre commune. Dans le dispositif VI, la chambre commune 505 est prolongée par une goulotte d'évacuation 585, s'étendant transversalement par rapport à cette chambre, à savoir vers le bas dans l'exemple illustré. Cette goulotte, de forme globalement tronconique évasée vers l'amont, est terminée par un orifice d'évacuation 586.

La variante des figures 17 à 20 présente des avantages spécifiques, notamment en termes de qualité de globale de nébulisation. En effet, le fait de prévoir un passage annulaire en aval de la sortie de buse permet, en combinaison avec la présence des moyens de renvoi, d'homogénéiser le flux d'air dans l'enceinte de nébulisation. Ces avantages sont tout particulièrement significatifs, moyennant un choix judicieux de la distance D544, notamment autour de 20 millimètres.

Les figures 21 et 22 illustrent un septième mode de réalisation du dispositif de nébulisation, conforme à l'invention. Sur ces figures, les éléments mécaniques analogues à ceux des figures 1 à 9 y sont affectés des mêmes numéros de référence, augmentés de 600.

Le dispositif de nébulisation VII de ce quatrième mode de réalisation diffère de celui I du premier mode de réalisation, notamment en ce que le canal de ventilation 604 s'étend en majeure partie à la périphérie extérieure du corps 601. Vu en bout, à savoir selon l'axe longitudinal du corps sur la figure 15, ce canal 604 forme un tronçon d'anneau, périphérique au corps 601. La section aval 642 de ce canal 604 débouche dans le passage annulaire 644 défini, de manière analogue aux premiers modes de réalisation, par le fût 611 et le col 612.

De plus le passage annulaire 644 de ce dispositif VII est situé en aval de la sortie 621 de la buse 620, tout comme dans le dispositif VI décrit immédiatement ci-dessus. On retrouve également, dans ce dispositif VII, la dimension caractéristique D644 dont la valeur correspond à celle de D544 donnée ci-dessus.

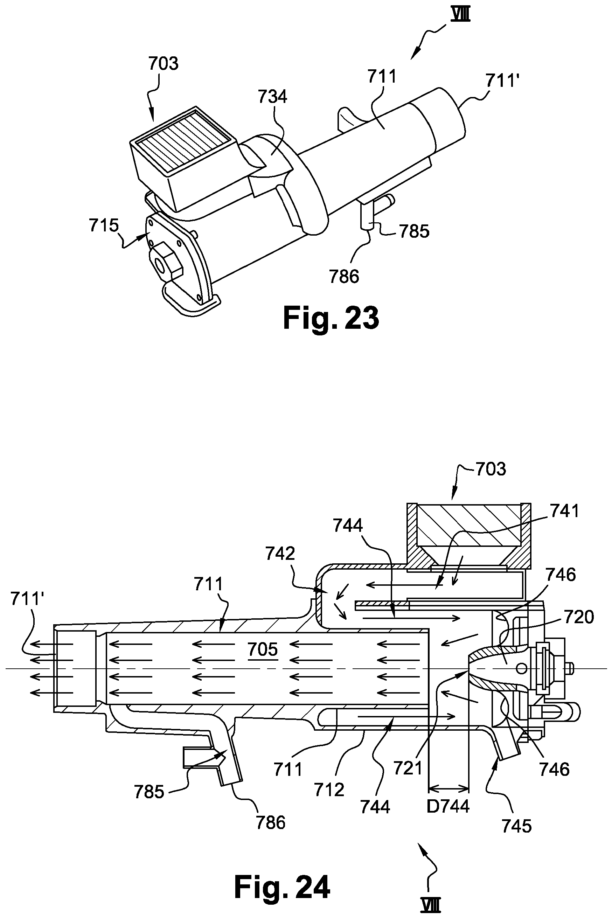

Les figures 23 et 24 illustrent un huitième mode de réalisation du dispositif de nébulisation, conforme à l'invention. Sur ces figures, les éléments mécaniques analogues à ceux des figures 1 à 9 y sont affectés des mêmes numéros de référence, augmentés de 700.

Le dispositif de nébulisation VIII de ce huitième mode de réalisation diffère de celui I du premier mode de réalisation, notamment en ce que les moyens de diffusion sont confondus avec la chambre commune 705. En d'autres termes, ce dispositif VII est dépourvu de branches, telles que celles 6 et 7 décrites ci-dessus. Ce corps forme un fût principal 711, à partir duquel s'étend un conduit d'évacuation secondaire 785. L'extrémité aval du fût 711 forme une sortie principale 711', alors que le conduit définit un orifice d'évacuation secondaire 786. Cette chambre commune 705, qui est rectiligne, s'étend dans le prolongement axial de la buse 720, à savoir que les axes principaux de cette chambre et de cette buse sont confondus.

De plus le passage annulaire 744 de ce dispositif VIII est situé en aval de la sortie 721 de la buse 720, tout comme dans le dispositif VI décrit ci-dessus. On retrouve également, dans ce dispositif VIII, la dimension caractéristique D744 dont la valeur correspond à celle de D544 donnée ci-dessus.

En service, l'air s'écoule le long du canal 704 puis du passage annulaire 744, sensiblement comme dans le premier mode de réalisation des figures 1 à 9. Puis le mélange entre le liquide et les gouttelettes s'écoule dans la chambre 705, en direction de l'orifice d'évacuation 786. Les gouttelettes, de préférence de petite taille, sont diffusées par cet orifice 786 vers l'environnement cible, alors que la majorité du jet de liquide est retenu à l'intérieur de la chambre 705.

Le mode de réalisation de ces figures 23 et 24 présente des avantages spécifiques. En effet la présence d'un fût rectiligne unique d'écoulement 711 permet de conserver un flux d'air uniforme dans la zone d'extraction du brouillard, jusqu'à la sortie principale 711'. Cela contribue à éviter les turbulences et, par conséquent, à assurer l'extraction d'un maximum de gouttes.

L'invention n'est pas limitée aux exemples décrits ci-dessus.

On peut notamment prévoir toute combinaison, techniquement réaliste pour l'homme du métier, entre notamment :
- les différentes géométries d'admission d'air dans la mesure où elles sont couvertes par le champ des revendications,
- la présence ou l'absence de branche(s) de diffusion,
- le nombre et la géométrie de ces branches.

A titre de variante non illustrée, on peut prévoir que les gouttelettes de liquide, diffusées dans l'environnement cible, contiennent un additif de tout type souhaité, à des fins de désinfection, de désodorisation ou analogues. Dans cet esprit, prévoir un additif à base d'huile essentielle est avantageux.

On peut également prévoir d'équiper le dispositif conforme à l'invention avec un moyen assurant la désinfection du liquide, contenu dans l'enceinte. Un tel moyen de désinfection peut être de tout type approprié, notamment par choc thermique (résistance chauffante) ou encore à base de LED UV (Light Emitting Diodes Ultraviolet).

De manière plus générale, l'invention trouve son application à des dispositifs de génération de gouttelettes, qui sont d'un type différent de celui décrit sur les figures, dans la mesure où ils sont couverts par le champ des revendications.

## Revendications

1. Dispositif de génération de gouttelettes (I ; II ; III ; IV ; V ; VI ; VII ; VIII) comportant :
- un corps creux (1 ; 101 ; 201 ; 301 ; 401 ; 501 ; 601) délimitant une enceinte de nébulisation,
- des moyens de génération de gouttelettes comprenant une buse de nébulisation (20; 120; 220; 320; 420; 520; 620; 720), formant un organe d'admission de liquide, ladite buse de nébulisation étant pourvu d'au moins un orifice (23; 623) d'admission de liquide et d'au moins un orifice (21; 621) de sortie de liquide, ladite buse de nébulisation étant apte à générer un jet de liquide (J) à l'intérieur de ladite enceinte de nébulisation selon un trajet de trajet de génération,
les moyens de génération de gouttelettes comprenant en outre un élément piézo-électrique (22), prévu à l'opposé dudit orifice de sortie de ladite buse, apte à émettre des ondes acoustiques dans ledit liquide pour générer des gouttelettes à partir dudit jet de liquide (J),
- des moyens de ventilation (3 ; 103 ; 203 ; 303 ; 403 ; 503 ; 603 ; 703) propres à générer un flux gazeux destiné à entraîner au moins une partie dudit liquide dans l'enceinte de nébulisation, ces moyens de ventilation comprenant un organe de ventilation (31) et un canal de ventilation (4 ; 104 ; 204 ; 304 ; 404 ; 504 ; 604 ; 704), s'étendant à partir dudit organe de ventilation et débouchant dans l'enceinte de nébulisation, ledit dispositif étant un dispositif de nébulisation (I ; II ; III; IV ; V; VI; VII; VIII) et comprenant en outre
- un passage intermédiaire (44 ; 144 ; 244 ; 344 ; 444 ; 544 ; 644 ; 744), le flux gazeux généré par l'organe de ventilation étant propre à s'écouler, dans le passage intermédiaire, selon un premier trajet d'écoulement différent du trajet de génération,
- des moyens de renvoi (46) propres à renvoyer le flux gazeux provenant du passage intermédiaire, radialement vers le centre de l'enceinte de nébulisation, selon un deuxième trajet d'écoulement sensiblement identique au trajet de génération, le passage intermédiaire (44) étant délimité par des parois en regard appartenant respectivement à un col amont (12), prévu au voisinage de la buse de nébulisation (20), et à un fût aval (11) de section transversale inférieure à celle du col.

2. Dispositif selon l'une des revendications précédentes, **caractérisé en ce que**, vu en bout, le passage intermédiaire (44) s'étend à la périphérie extérieure de ladite buse de nébulisation.

3. Dispositif selon la revendication 2, **caractérisé en ce que** l'extrémité amont du passage intermédiaire (544 ; 644 ; 744) est située, selon la direction de génération, en aval de la sortie (521) de ladite buse de nébulisation (520), la distance (D544 ; D644 ; D744) séparant, selon la direction de génération, la sortie (521) de ladite buse de nébulisation (520) et l'extrémité amont (544') du passage intermédiaire, étant comprise entre 5 et 50 millimètres, notamment entre 10 et 30 millimètres, notamment voisine de 20 millimètres.

4. Dispositif selon l'une quelconque des revendications précédentes, **caractérisé en ce que** la section transversale du fût (11) est supérieure à la section extérieure de ladite buse de nébulisation (20).

5. Dispositif selon la revendication 4, **caractérisé en ce que** le fût (11) et le col (12) sont coaxiaux et délimitent un passage intermédiaire de forme annulaire, la dimension transversale ou hauteur (H44) du passage intermédiaire étant en particulier comprise entre 5 et 20 millimètres, notamment voisine de 10 millimètres.

6. Dispositif selon l'une des revendications précédentes, **caractérisé en ce que** les moyens de renvoi comprennent des parois dites de renvoi (46) présentant une forme arrondie, dont la concavité est tournée vers l'arrière, en section longitudinale.

7. Dispositif selon la revendication 6, **caractérisé en ce que**, vues de face, les parois de renvoi forment une couronne (46) située à la périphérie extérieure de ladite buse de nébulisation (20), le bord intérieur (47') et le bord extérieur (47") de ladite couronne étant situés de part et d'autre du bord intérieur (44") du passage (44) intermédiaire.

8. Dispositif selon l'une des revendications précédentes, **caractérisé en ce que** le passage intermédiaire définit un trajet d'écoulement d'air, dont la direction d'écoulement d'air est sensiblement identique à la direction de génération et dont le sens d'écoulement d'air est inverse du sens de génération.

9. Dispositif selon l'une quelconque des revendications précédentes, **caractérisé en ce que** les moyens de ventilation comprennent un module de ventilation, et il est prévu des moyens de fixation, notamment amovible du module de ventilation sur le corps dudit dispositif.

10. Dispositif selon l'une quelconque des revendications précédentes, **caractérisé en ce que** le canal de ventilation comprend un tronçon amont (41), prévu immédiatement à la sortie de l'organe de ventilation, les trajets d'écoulement d'air, respectivement dans le tronçon amont et dans le passage intermédiaire, étant mutuellement différents.

11. Dispositif selon l'une quelconque des revendications précédentes, **caractérisé en ce qu'**il comprend une chambre amont (705), dite chambre commune, destinée à l'écoulement à la fois du liquide et des gouttelettes de brouillard, ce dispositif étant dépourvu de branche radiale de diffusion de gouttelettes, la chambre commune (705) étant notamment rectiligne et présentant alors un axe principal qui est confondu avec l'axe principal de l'enceinte de nébulisation.

12. Dispositif selon l'une quelconque des revendications 1 à 10, **caractérisé en ce que** l'enceinte de nébulisation comprend une chambre amont (5), dite chambre commune, destinée à l'écoulement à la fois du liquide et des gouttelettes de brouillard, cette chambre s'étendant axialement, le dispositif comprend au moins une branche de diffusion de gouttelettes de brouillard (6, 7), chaque branche s'étendant radialement vers l'extérieur de cette chambre en vue de dessus, et le dispositif comprend en outre des moyens d'évacuation (8) de liquide, prolongeant ladite chambre commune, au-delà de la jonction entre la branche de diffusion et la chambre commune.

13. Dispositif selon l'une quelconque des revendications précédentes, **caractérisé en ce que** le corps (1) comprend au moins une tétine d'évacuation de liquide (45 ; 645) définissant un orifice (45' ; 645') amont d'évacuation de liquide.

14. Procédé de mise en oeuvre d'un dispositif selon l'une des revendications précédentes, dans lequel :
- on admet du liquide dans l'enceinte de nébulisation,
- on fait s'écouler un jet dudit liquide à l'intérieur de ladite enceinte de nébulisation, selon un trajet de génération,
- on fait s'écouler de l'air dans le passage annulaire selon un premier trajet d'écoulement différent du trajet de génération, de sorte que cet air frappe les parois de renvoi,
- on fait ensuite s'écouler cet air dans l'enceinte de nébulisation, selon un deuxième trajet d'écoulement sensiblement identique au trajet de génération,
- on emporte au moins une fraction dudit liquide et d'un brouillard de gouttelettes formées à partir dudit liquide, au moyen de l'air s'écoulant selon le deuxième trajet d'écoulement.

## Patentansprüche

1. Vorrichtung zur Erzeugung von Tröpfchen (I; II; III; IV; V; VI; VII; VIII) umfassend:
- einen eine Vernebelungskammer begrenzenden Hohlkörper (1; 101; 201; 301; 401; 501; 601),
- Mittel zum Erzeugen von Tröpfchen, umfassend eine Zerstäubungsdüse(20; 120; 220; 320; 420; 520; 620; 720), die ein Flüssigkeitseinlasselement bildet, wobei die Zerstäubungsdüse mit mindestens einer Flüssigkeitseinlassöffnung (23;623) und mindestens einer Flüssigkeitsauslassöffnung (21;621) versehen ist, wobei die Zerstäubungsdüse in der Lage ist, einen Flüssigkeitsstrahl (J) innerhalb der Vernebelungskammer entlang eines Erzeugungspfads zu erzeugen, wobei die Mittel zum Erzeugen von Tröpfchen weiterhin ein piezoelektrisches Element (22) umfassen, das gegenüber der Auslassöffnung der Düse vorgesehen ist und akustische Wellen in die Flüssigkeit aussenden kann, um Tröpfchen aus dem Flüssigkeitsstrahl (J) zu erzeugen,
- Belüftungsmittel (3; 103; 203; 303; 403; 503; 603; 703), die in der Lage sind, einen Gasstrom zu erzeugen, der dazu bestimmt ist, zumindest einen Teil der Flüssigkeit in die Vernebelungskammer zu treiben, wobei diese Belüftungsmittel ein Belüftungselement (31) umfassen und einen Belüftungskanal (4; 104; 204; 304; 404; 504; 604; 704), der sich von dem Belüftungselement erstreckt und in die Vernebelungskammer mündet,
wobei die Vorrichtung ein Vernebelungsgerät (I; II; III; IV; V; VI; VII; VIII) ist, und weiterhin Folgendes umfasst:
- einen Zwischendurchgang (44; 144; 244; 344; 444; 544; 644; 744), wobei der vom Belüftungselement erzeugte Gasstrom im Zwischendurchgang entlang eines ersten Pfads strömen kann, der vom Erzeugungsweg unterschiedlich ist,
- Rückführmittel (46), die in der Lage sind, den vom Zwischenkanal kommenden Gasstrom radial zur Mitte der Vernebelungskammer entlang eines zweiten Strömungswegs zurückzuleiten, der im Wesentlichen mit dem Erzeugungsweg identisch ist,
wobei der Zwischendurchgang (44) durch gegenüberliegende Wände begrenzt ist, die jeweils zu einem stromaufwärtigen Hals (12), der in der Nähe der Zerstäubungsdüse (20) vorgesehen ist, und zu einem stromabwärtigen Zylinder (11) mit einem Querschnitt gehören, der kleiner als der des Halses ist.

2. Vorrichtung nach einem der vorhergehenden Ansprüche, **dadurch gekennzeichnet, dass** sich der Zwischenkanal (44) vom Ende her gesehen bis zum Außenumfang der Vernebelungsdüse erstreckt.

3. Vorrichtung nach Anspruch 2, **dadurch gekennzeichnet, dass** das stromaufwärtige Ende des Zwischenkanals (544; 644; 744) in Erzeugungsrichtung stromabwärts des Auslasses (521) der Zerstäubungsdüse (520) liegt, wobei der Abstand (D544; D644; D744), der je nach Erzeugungsrichtung den Auslass (521) der Zerstäubungsdüse (520) und das stromaufwärtige Ende (544') des Zwischenkanals trennt, zwischen 5 und 50 Millimeter beträgt, insbesondere zwischen 10 und 30 Millimeter, insbesondere nahe 20 Millimeter.

4. Vorrichtung nach einem der vorhergehenden Ansprüche, **dadurch gekennzeichnet, dass** der Querschnitt des Zylinders (11) größer ist als der Außenquerschnitt der Zerstäubungsdüse (20) .

5. Vorrichtung nach Anspruch 4, **dadurch gekennzeichnet, dass** der Zylinder (11) und der Hals (12) koaxial sind und einen ringförmigen Zwischenkanal begrenzen, wobei die Querabmessung oder Höhe (H44) des Zwischenkanals insbesondere zwischen 5 und 20 Millimeter liegt, insbesondere nahe 10 Millimeter.

6. Vorrichtung nach einem der vorhergehenden Ansprüche, **dadurch gekennzeichnet, dass** die Rückführmittel sogenannte Rückführwände (46) mit abgerundeter Form umfassen, deren Konkavität im Längsschnitt nach hinten weist.

7. Vorrichtung nach Anspruch 6, **dadurch gekennzeichnet, dass** die Rückwände von vorne gesehen eine Krone (46) bilden, die sich am Außenumfang der Zerstäubungsdüse (20) befindet, wobei der Innenrand (47') und der Außenrand (47") der Krone sich auf beiden Seiten der Innenkante (44") des Zwischenkanals (44) befinden.

8. Vorrichtung nach einem der vorhergehenden Ansprüche, **dadurch gekennzeichnet, dass** der Zwischenkanal einen Luftströmungspfad definiert, dessen Luftströmungsrichtung im Wesentlichen mit der Erzeugungsrichtung identisch ist und dessen Richtung der Luftströmung der Erzeugungsrichtung entgegengesetzt ist

9. Vorrichtung nach einem der vorhergehenden Ansprüche, **dadurch gekennzeichnet, dass** die Belüftungsmittel ein Belüftungsmodul umfassen und Mittel zur, insbesondere abnehmbaren, Befestigung des Belüftungsmoduls am Körper der Vorrichtung vorgesehen sind.

10. Vorrichtung nach einem der vorhergehenden Ansprüche, **dadurch gekennzeichnet, dass** der Belüftungskanal einen stromaufwärtigen Abschnitt (41) umfasst, der unmittelbar am Auslass des Belüftungselements liegt, wobei die Luftströmungswege, die jeweils im stromaufwärtigen Abschnitt und im Zwischenabschnitt vorgesehen sind, sich gegenseitig unterscheiden.

11. Vorrichtung nach einem der vorhergehenden Ansprüche, **dadurch gekennzeichnet, dass** sie eine stromaufwärts gelegene Kammer (705), sogenannte gemeinsame Kammer, umfasst, die für den Fluss sowohl der Flüssigkeit als auch der Nebeltröpfchen bestimmt ist, wobei diese Vorrichtung keinen radialen Diffusionszweig für Tröpfchen aufweist, wobei die gemeinsame Kammer (705) insbesondere geradlinig ist und eine Hauptachse aufweist, die mit der Hauptachse der Vernebelungskammer zusammenfällt.

12. Vorrichtung nach einem der Ansprüche 1 bis 10, **dadurch gekennzeichnet, dass** die Vernebelungskammer eine stromaufwärts gelegene Kammer (5), sogenannte gemeinsame Kammer, umfasst, die für den Fluss sowohl der Flüssigkeit als auch der Nebeltröpfchen bestimmt ist, wobei sich diese Kammer axial erstreckt, und die Vorrichtung mindestens einen Zweig zum Zerstäuben von Nebeltröpfchen (6, 7) umfasst, wobei sich jeder Zweig in der Draufsicht radial zur Außenseite dieser Kammer erstreckt, und die Vorrichtung weiterhin Flüssigkeitsabsaugmittel (8) umfasst, die die gemeinsame Kammer über die Verbindung zwischen dem Diffusionszweig und der gemeinsamen Kammer hinaus verlängern.

13. Vorrichtung nach einem der vorhergehenden Ansprüche, **dadurch gekennzeichnet, dass** der Körper (1) mindestens einen Flüssigkeitsentleerungsnippel (45; 645) umfasst, der eine stromaufwärts gelegene Flüssigkeitsentleerungsöffnung (45'; 645') definiert.

14. Verfahren zur Umsetzung einer Vorrichtung nach einem der vorhergehenden Ansprüche, bei dem man:
- Flüssigkeit in die Vernebelungskammer eingelässt,
- einen Strahl der Flüssigkeit innerhalb der Vernebelungskammer entlang eines Erzeugungspfads strömen lässt,
- Luft durch den Ringkanal entlang eines ersten Strömungswegs strömen lässt, der sich vom Erzeugungsweg unterscheidet, so dass diese Luft auf die Rückführwände trifft,
- diese Luft dann entlang eines zweiten Strömungswegs, der im Wesentlichen mit dem Erzeugungsweg identisch ist, in die Vernebelungskammer strömen lässt,
- zumindest einen Teil der Flüssigkeit und einen aus der Flüssigkeit gebildeter Tröpfchennebel durch die entlang des zweiten Strömungswegs strömende Luft abtransportiert.

## Claims

1. Device for generating droplets (I; II; III; IV; V; VI; VII; VIII) comprising:
- a hollow body (1; 101; 201; 301; 401; 501; 601) delimiting a nebulization chamber,
- means for generating droplets comprising a nebulization nozzle (20; 120; 220; 320; 420; 520; 620; 720), forming a liquid inlet member, said nebulization nozzle being provided with at least one liquid inlet orifice (23 623) and at least one liquid outlet orifice (21; 621), said nebulization nozzle being capable of generating a jet of liquid (J) inside said nebulization chamber along a generation path, the means for generating droplets further comprising a piezoelectric element (22), provided opposite said outlet orifice of said nozzle, capable of emitting acoustic waves into said liquid to generate droplets from said jet of liquid (J),
- ventilation means (3; 103; 203; 303; 403; 503; 603; 703) capable of generating a gas flow intended to drive at least part of said liquid into the nebulization chamber, these ventilation means comprising a ventilation member (31) and a ventilation channel (4; 104; 204; 304; 404; 504; 604; 704), extending from said ventilation member and opening into the nebulisation chamber,
said device being a nebulization device (I; II; III; IV; V; VI; VII; VIII) and further comprising
- an intermediate passage (44; 144; 244; 344; 444; 544; 644; 744), the gas flow generated by the ventilation member being able to flow in the intermediate passage, along a first path of flow different from the generation path,
- return means (46) capable of returning the gas flow coming from the intermediate passage radially towards the center of the nebulization chamber, along a second flow path substantially identical to the generation path,
the intermediate passage (44) being delimited by facing walls belonging respectively to an upstream neck (12), provided in the vicinity of the nebulization nozzle (20), and to a downstream barrel (11) of cross section less than that of the collar.

2. Device according to one of the preceding claims, **characterized in that**, seen from the end, the intermediate passage (44) extends to the outer periphery of said nebulization nozzle.

3. Device according to claim 2, **characterized in that** the upstream end of the intermediate passage (544; 644; 744) is located, in the direction of generation, downstream of the outlet (521) of said nebulization nozzle (520), the distance (D544; D644; D744) separating, according to the direction of generation, the outlet (521) of said nebulization nozzle (520) and the upstream end (544') of the intermediate passage being between 5 and 50 millimeters, in particular between 10 and 30 millimeters, in particular close to 20 millimeters.

4. Device according to any one of the preceding claims, **characterized in that** the cross section of the barrel (11) is greater than the external section of said nebulization nozzle (20) .

5. Device according to claim 4, **characterized in that** the barrel (11) and the neck (12) are coaxial and delimit an intermediate passage of annular shape, the transverse dimension or height (H44) of the intermediate passage being in particular between 5 and 20 millimeters, notably close to 10 millimeters.

6. Device according to one of the preceding claims, **characterized in that** the return means comprise so-called return walls (46) having a rounded shape, the concavity of which faces rearwards, in longitudinal section.

7. Device according to claim 6, **characterized in that**, seen from the front, the return walls form a crown (46) located at the outer periphery of said nebulization nozzle (20), the inner edge (47') and the outer edge (47") of said crown being located on either side of the inner edge (44") of the intermediate passage (44).

8. Device according to one of the preceding claims, **characterized in that** the intermediate passage defines an air flow path, the direction of air flow of which is substantially identical to the direction of generation and the direction of air flow of which is opposite to the direction of generation.

9. Device according to any one of the preceding claims, **characterized in that** the ventilation means comprise a ventilation module, and means are provided for fixing, in particular removably, the ventilation module on the body of said device.

10. Device according to any one of the preceding claims, **characterized in that** the ventilation channel comprises an upstream section (41), provided immediately at the outlet of the ventilation member, the air flow paths, respectively in the upstream section and in the intermediate passage, being mutually different.

11. Device according to any one of the preceding claims, **characterized in that** it comprises an upstream chamber (705), called a common chamber, intended for the flow of both the liquid and the mist droplets, this device being devoid of a radial droplet diffusion branch, the common chamber (705) being in particular rectilinear and having a main axis which coincides with the main axis of the nebulization chamber.

12. Device according to any one of claims 1 to 10, **characterized in that** the nebulization chamber comprises an upstream chamber (5), called a common chamber, intended for the flow of both the liquid and the mist droplets, this chamber extending axially, the device comprises at least one branch for diffusing mist droplets (6, 7), each branch extending radially towards the outside of this chamber in top view, and the device further comprises liquid evacuation means (8), extending said common chamber beyond the junction between the diffusion branch and the common chamber.

13. Device according to any one of the preceding claims, **characterized in that** the body (1) comprises at least one liquid evacuation nipple (45; 645) defining an upstream evacuation orifice (45'; 645') of liquid.

14. Method for implementing a device according to one of the preceding claims, in which:
- liquid is admitted into the nebulization chamber,
- a jet of said liquid is made to flow inside said nebulization chamber, along a generation path,
- air is made to flow through the annular passage along a first flow path different from the generation path, so that this air hits the return walls,
- this air is then made to flow into the nebulization chamber, along a second flow path substantially identical to the generation path,
- at least a fraction of said liquid and a mist of droplets formed from said liquid are carried away, by means of the air flowing along the second flow path.
